(19) Europäisches Patentamt / European Patent Office / Office européen des brevets

(11) **EP 4 708 995 A1**

(12) **EUROPEAN PATENT APPLICATION**
published in accordance with Art. 153(4) EPC

(43) Date of publication:
**11.03.2026 Bulletin 2026/11**

(21) Application number: **24830744.9**

(22) Date of filing: **25.06.2024**

(51) International Patent Classification (IPC):
***H04W 72/044*** (2023.01)

(86) International application number:
**PCT/CN2024/101252**

(87) International publication number:
**WO 2025/002104 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310809455**

(71) Applicant: **Huawei Technologies Co., Ltd.
Shenzhen, Guangdong 518129 (CN)**

(72) Inventors:
• **ZHANG, Yi**
**Shenzhen, Guangdong 518129 (CN)**
• **QI, Hong**
**Shenzhen, Guangdong 518129 (CN)**
• **SU, Hongjia**
**Shenzhen, Guangdong 518129 (CN)**

(74) Representative: **Thun, Clemens
Mitscherlich PartmbB
Karlstraße 7
80333 München (DE)**

(54) **COMMUNICATION METHOD AND APPARATUS**

(57) This application pertains to the field of communication technologies, and provides a communication method and apparatus, to improve reliability of communication of a terminal apparatus in an SL. In the method, a first terminal apparatus may determine a transmit beam based on M first channel measurement results carried in M first signals, and determine a receive beam based on M second channel measurement results corresponding to the M first signals. Compared with existing beam management in which a terminal apparatus determines a transmit beam only based on a channel measurement result carried in a feedback signal, or determines a receive beam only based on a channel measurement result obtained by measuring a received reference signal, in this method, the first terminal apparatus may determine both a transmit beam and a receive beam for subsequent signal sending and receiving, so that reliability of communication of the first terminal apparatus can be improved. In addition, this method simplifies a beam management procedure, to reduce resource overheads and improve resource utilization.

FIG. 9

## Description

This application claims priority to Chinese Patent Application No. 202310809455.7, filed with the China National Intellectual Property Administration on June 30, 2023 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

Beam management (beam management) is a process in which a base station and a terminal apparatus obtain a transmit beam set and a receive beam set. Beam management mainly includes the following four steps: beam sweeping, beam measurement, beam reporting, and beam determining. The base station may determine a corresponding transmit beam and a corresponding receive beam in the four steps. Similarly, the terminal apparatus may also determine a corresponding transmit beam and a corresponding receive beam in the four steps. In a sidelink (sidelink), the terminal apparatus may also determine a corresponding transmit beam and a corresponding receive beam in the four steps in the beam management.

However, how to improve reliability of communication of the terminal apparatus in the SL is an urgent problem to be resolved.

## SUMMARY

Embodiments of this application provide a communication method and apparatus, to improve reliability of communication of a terminal apparatus in an SL.

To achieve the foregoing objective, the following technical solutions are used in this application.

According to a first aspect, a communication method is provided. The method includes: sending N first reference signals to a second terminal apparatus; receiving M first signals from the second terminal apparatus; determining a first transmit beam based on first channel measurement results of M first reference signals; and determining a first receive beam based on M second channel measurement results. N is an integer greater than 1; the M first signals are signals in P first signals, the P first signals are signals corresponding to P first reference signals, the M first signals carry first channel measurement results of M first reference signals corresponding to the M first signals, P is an integer less than or equal to N, and M is an integer less than or equal to P; the first transmit beam is used to send a signal; and the second channel measurement result is a channel measurement result of the first signal, and the first receive beam is used to receive a signal.

It can be learned from the method according to the first aspect that, a first terminal apparatus may determine a transmit beam based on M first channel measurement results carried in M first signals, and determine a receive beam based on M second channel measurement results corresponding to the M first signals. Compared with existing beam management in which a terminal apparatus determines a transmit beam only based on a channel measurement result carried in a feedback signal, or determines a receive beam only based on a channel measurement result obtained by measuring a received reference signal, in this method, the first terminal apparatus may determine both a transmit beam and a receive beam for subsequent signal sending and receiving, so that reliability of communication of the first terminal apparatus can be improved. In addition, this method simplifies a beam management procedure, to reduce resource overheads and improve resource utilization.

In a possible design solution, determining the first transmit beam based on the first channel measurement results of the M first reference signals includes: determining a first channel measurement result set based on the first channel measurement results of the M first reference signals and a first preset threshold, and determining a first transmit beam set based on the first channel measurement result set, where the first channel measurement result set includes a first channel measurement result that is in the first channel measurement results of the M first reference signals and that is greater than or equal to the first preset threshold, and the first transmit beam is any transmit beam in the first transmit beam set; or determining the first transmit beam based on the first channel measurement results of the M first reference signals and a first preset threshold, where the first transmit beam is a transmit beam corresponding to a largest first channel measurement result that is in the first channel measurement results of the M first reference signals and that is greater than or equal to the first preset threshold, so that it can be ensured that the first transmit beam can meet a requirement for communication between the first terminal apparatus and the second terminal apparatus.

In a possible design solution, determining the first receive beam based on the M second channel measurement results includes: determining a second channel measurement result set based on the M second channel measurement results and a second preset threshold, and determining a first receive beam set based on the second channel measurement result set, where the second channel measurement result set includes a second channel measurement result that is in the M second channel measurement results and that is greater than or equal to the second preset threshold, and the first receive beam is any receive beam in the first receive beam set; or determining the first receive beam based on the M second channel measurement results and a second preset threshold, where the first receive beam is a receive beam corresponding to a largest second channel measurement result that is in the M second channel measurement results and that is greater than or equal to the second preset threshold, so that it can be ensured that the first receive beam can meet a requirement for communication between the first terminal apparatus and the second terminal apparatus.

In a possible design solution, the method according to the first aspect may further include: receiving X second reference signals from the second terminal apparatus, determining X third channel measurement results based on the X second reference signals, and sending X second signals to the second terminal apparatus. X is an integer greater than 1, and the X second signals carry the X third channel measurement results. In other words, the first terminal apparatus may perform channel measurement on the received X second reference signals, and feed back, to the second terminal apparatus, the X third channel measurement results obtained through channel measurement, so that the second terminal apparatus can subsequently determine a second transmit beam and/or a second receive beam corresponding to the second terminal apparatus.

Optionally, the method according to the first aspect may further include: sending Y third reference signals to the second terminal apparatus. Y is an integer greater than 1, and the third reference signal may be used for channel measurement, so that the second terminal apparatus can subsequently determine, based on the third reference signal, a second receive beam corresponding to the second terminal apparatus.

In a possible design solution, the first reference signal is carried on a physical sidelink shared channel PSSCH, and the first signal is carried on a physical sidelink feedback channel PSFCH; or the first reference signal is carried on a synchronization signal block SSB, and the first signal is carried on a physical sidelink feedback channel PSFCH, that is, the first reference signal and the first signal are carried on an existing channel, to reduce implementation difficulty, or may be carried on another existing channel or a new channel, to improve implementation flexibility. This is not limited.

In a possible design solution, the second reference signal is carried on the PSSCH, the second signal is carried on the PSFCH, and the third reference signal is carried on the PSSCH; or the second reference signal is carried on the SSB, the second signal is carried on the PSFCH, and the third reference signal is carried on the SSB, that is, the second reference signal, the second signal, and the third reference signal are carried on an existing channel, to reduce implementation difficulty, or may be carried on another existing channel or a new channel, to improve implementation flexibility. This is not limited.

According to a second aspect, a communication method is provided. The method includes: receiving P first reference signals from a first terminal apparatus, determining P first channel measurement results based on the P first reference signals, and sending P first signals to a first terminal apparatus. P is an integer greater than 1, and the P first signals carry the P first channel measurement results.

It can be learned from the method according to the first aspect and the method according to the second aspect that, a second terminal apparatus may perform channel measurement on the received P first reference signals, and feed back, to the second terminal apparatus, the P first channel measurement results obtained through channel measurement, so that the first terminal apparatus can subsequently determine a transmit beam and a receive beam that correspond to the first terminal apparatus, to improve reliability of communication of the first terminal apparatus. In addition, this method simplifies a beam management procedure, to reduce resource overheads and improve resource utilization.

In a possible design solution, the method according to the second aspect may further include: sending Q second reference signals to the first terminal apparatus, and receiving Z second signals from the first terminal apparatus. Q is an integer greater than 1; and the Z first signals are signals in X second signals, the X second signals are signals corresponding to X second reference signals, the Z second signals carry third channel measurement results of Z second reference signals corresponding to the Z second signals, X is an integer less than or equal to Q, and Z is an integer less than or equal to X. In this way, the second terminal apparatus can use the Z second signals to subsequently determine a transmit beam and a receive beam that correspond to the second terminal apparatus.

Optionally, the method according to the first aspect may further include: determining Z fourth channel measurement results based on the Z second signals, determining a second transmit beam based on the third channel measurement results of the Z second reference signals, and determining a second receive beam based on the Z fourth channel measurement results. The second receive beam is used to receive a signal, and the second transmit beam is used to send a signal. Compared with existing beam management in which a terminal apparatus determines a transmit beam only based on a channel measurement result carried in a feedback signal, or determines a receive beam only based on a channel measurement result obtained by measuring a received reference signal, in this method, the second terminal apparatus may determine both a transmit beam and a receive beam for subsequent signal sending and receiving, so that reliability of communication of the second terminal apparatus can be improved. In addition, this method simplifies a beam management procedure, to reduce resource overheads and improve resource utilization.

In a possible design solution, the method according to the second aspect may further include: receiving R third reference signals from the first terminal apparatus. R is an integer greater than 1, and the third reference signal may be used for channel measurement, so that a corresponding receive beam can be subsequently determined based on the third reference signals.

Optionally, the method according to the second aspect may further include: determining R fifth channel measurement results based on the R third reference signals, determining a second transmit beam based on the third channel measurement results of the Z second reference signals, and determining a second receive beam based on the R fifth channel measurement results. The second transmit beam is used to send a signal, and the second receive beam is used to receive a signal. It may be understood that the second terminal apparatus separately trains the transmit beam and the receive beam of the second terminal apparatus, so that accuracy of the second transmit beam and the second receive beam can be further improved.

In a possible design solution, determining the second transmit beam based on the third channel measurement results of the Z second reference signals includes: determining a third channel measurement result set based on the third channel measurement results of the Z second reference signals and a third preset threshold, and determining a second transmit beam set based on the third channel measurement result set, where the third channel measurement result set includes a third channel measurement result that is in the third channel measurement results of the Z second reference signals and that is greater than or equal to the third preset threshold, and the second transmit beam is any transmit beam in the second transmit beam set; or determining the second transmit beam based on the third channel measurement results of the Z second reference signals and a third preset threshold, where the second transmit beam is a transmit beam corresponding to a largest third channel measurement result that is in the Z second reference signals and that is greater than or equal to the third preset threshold, so that it can be ensured that the second transmit beam can meet a requirement for communication between the first terminal apparatus and the second terminal apparatus.

In a possible design solution, determining the second receive beam based on the Z fourth channel measurement results includes: determining a fourth channel measurement result set based on the Z fourth channel measurement results and a fourth preset threshold, and determining a second receive beam set based on the fourth channel measurement result set, where the fourth channel measurement result set includes a fourth channel measurement result that is in the Z fourth channel measurement results and that is greater than or equal to the fourth preset threshold, and the second receive beam is any receive beam in the second receive beam set; or determining the second receive beam based on the Z fourth channel measurement results and a fourth preset threshold, where the second receive beam is a receive beam corresponding to a largest fourth channel measurement result that is in the Z fourth channel measurement results and that is greater than or equal to the fourth preset threshold, so that it can be ensured that the second receive beam can meet a requirement for communication between the first terminal apparatus and the second terminal apparatus.

In a possible design solution, determining the second receive beam based on the R fifth channel measurement results includes: determining a fifth channel measurement result set based on the R fifth channel measurement results and a fifth preset threshold, and determining a second receive beam set based on the fifth channel measurement result set, where the fifth channel measurement result set includes a fifth channel measurement result that is in the Z fifth channel measurement results and that is greater than or equal to the fifth preset threshold, and the second receive beam is any receive beam in the second receive beam set; or determining the second receive beam based on the R fifth channel measurement results and a fifth preset threshold, where the second receive beam is a receive beam corresponding to a largest fifth channel measurement result that is in the R fifth channel measurement results and that is greater than or equal to the fifth preset threshold, so that it can be ensured that the second receive beam can meet a requirement for communication between the first terminal apparatus and the second terminal apparatus. In a possible design solution, the first reference signal is carried on a physical sidelink shared channel PSSCH, and the first signal is carried on a physical sidelink feedback channel PSFCH.

In a possible design solution, the second reference signal is carried on the PSSCH, and the second signal is carried on the PSFCH.

In a possible design solution, the third reference signal is carried on the PSSCH.

In addition, for other technical effects of the communication method according to the second aspect, refer to the technical effects of the communication method according to the first aspect. Details are not described herein again.

According to a third aspect, a communication apparatus is provided. The apparatus includes modules configured to perform the method according to the first aspect, for example, a transceiver module and a processing module. The transceiver module may be configured to implement a function of receiving and sending a message by the apparatus. The processing module may be configured to implement a function of the apparatus other than receiving and sending the message.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module, and the storage module stores a program or instructions. When the processing module executes the program or the instructions, the communication apparatus is caused to perform the communication method according to the first aspect.

It should be noted that the communication apparatus according to the third aspect may be a terminal apparatus, may be a chip (system) or another part or component that may be disposed in the terminal apparatus, or may be an apparatus including the terminal apparatus. This is not limited in this application.

In addition, for technical effects of the communication apparatus according to the third aspect, refer to technical effects of the communication method according to the first aspect. Details are not described herein again.

According to a fourth aspect, a communication apparatus is provided. The apparatus includes modules configured to perform the method according to the second aspect, for example, a transceiver module and a processing module. The transceiver module may be configured to implement a function of receiving and sending a message by the apparatus. The processing module may be configured to implement a function of the apparatus other than receiving and sending the message.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module, and the storage module stores a program or instructions. When the processing module executes the program or the instructions, the communication apparatus is caused to perform the communication method according to the second aspect.

It should be noted that the communication apparatus according to the fourth aspect may be a terminal apparatus, for example, an application function, may be a chip (system) or another part or component that may be disposed in the terminal apparatus, or may be an apparatus including a network device. This is not limited in this application.

In addition, for technical effects of the communication apparatus according to the fourth aspect, refer to technical effects of the communication method according to the second aspect. Details are not described herein again.

According to a fifth aspect, a communication apparatus is provided. The communication apparatus includes a processor. The processor is configured to perform the communication method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be separately disposed. The memory may be configured to store a computer program and/or data related to the communication method according to the first aspect or the second aspect.

In this application, the communication apparatus according to the fifth aspect may be a network device, a chip (system) or another part or component that may be disposed in the network device, or an apparatus including the network device.

In addition, for technical effects of the communication apparatus according to the fifth aspect, refer to technical effects of the communication method according to the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to enable the communication apparatus to perform the communication method according to the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be a network device, a chip (system) or another part or component that may be disposed in the network device, or an apparatus including the network device.

In addition, for technical effects of the communication apparatus according to the sixth aspect, refer to technical effects of the communication method according to the first aspect or the second aspect. Details are not described herein again.

According to a seventh aspect, a communication apparatus is provided, and includes a processor and a memory. The memory is configured to store a computer program, and when the processor executes the computer program, the communication apparatus is caused to perform the communication method according to the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a network device, a chip (system) or another part or component that may be disposed in the network device, or an apparatus including the network device.

In addition, for technical effects of the communication apparatus according to the seventh aspect, refer to technical effects of the communication method according to the first aspect or the second aspect. Details are not described herein again.

According to an eighth aspect, a communication apparatus is provided, and includes a processor. The processor is configured to: be coupled to a memory, and after reading a computer program in the memory, perform the communication method according to the first aspect or the second aspect based on the computer program.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a network device, a chip (system) or another part or component that may be disposed in the network device, or an apparatus including the network device.

In addition, for technical effects of the communication apparatus according to the eighth aspect, refer to technical effects of the communication method according to the first aspect or the second aspect. Details are not described herein again.

According to a ninth aspect, a communication system is provided. The communication system includes the first network element according to the first aspect and/or the application function according to the second aspect.

According to a tenth aspect, a computer-readable storage medium is provided, and includes a computer program or instructions. When the computer program or the instructions are run on a computer, the computer is caused to perform the communication method according to the first aspect or the second aspect.

According to an eleventh aspect, a computer program product is provided, and includes a computer program or instructions. When the computer program or the instructions are run on a computer, the computer is caused to perform the communication method according to the first aspect or the second aspect.

## BRIEF DESCRIPTION OF DRAWINGS

FIG. 1 is a diagram of a P1 state in beam management;
FIG. 2 is a diagram of a P2 state in beam management;
FIG. 3 is a diagram of a P3 state in beam management;
FIG. 4 is a diagram of a QCL state relationship between a first RS and a second RS;
FIG. 5 is a diagram of an SL slot structure;
FIG. 6 is a diagram of SL beam sweeping;
FIG. 7 is a diagram of an architecture of a communication system according to an embodiment of this application;
FIG. 8 is a diagram in which a first terminal apparatus and a second terminal apparatus perform initial beam training;
FIG. 9 is a schematic flowchart of a communication method according to an embodiment of this application;
FIG. 10 is a diagram of a QCL relationship between a transmit beam set #1 and an S-SSB #1;
FIG. 11 is a diagram in which a first terminal apparatus performs transmit beam sweeping and receive beam sweeping according to an embodiment of this application;
FIG. 12 is a diagram of a QCL relationship between a receive beam set #1 and an S-SSB #1 according to an embodiment of this application;
FIG. 13 is a diagram of a QCL relationship between a transmit beam set #2 and an S-SSB #2 according to an embodiment of this application;
FIG. 14 is a diagram of a QCL relationship between a receive beam set #2 and an S-SSB #2 according to an embodiment of this application;
FIG. 15 is a diagram in which a second terminal apparatus performs transmit beam sweeping and receive beam sweeping according to an embodiment of this application;
FIG. 16 is a diagram in which a second terminal apparatus performs receive beam sweeping according to an embodiment of this application;
FIG. 17 is a diagram of beam incorrespondence between a first terminal apparatus and a second terminal apparatus according to an embodiment of this application;
FIG. 18 is a diagram in which a UE #1 performs transmit beam sweeping according to an embodiment of this application;
FIG. 19 is a diagram in which a UE #2 performs receive beam sweeping according to an embodiment of this application;
FIG. 20 is a diagram in which a UE #2 performs transmit beam sweeping according to an embodiment of this application;
FIG. 21 is a diagram in which a UE #1 performs receive beam sweeping according to an embodiment of this application;
FIG. 22 is a diagram 1 of a structure of a communication apparatus according to an embodiment of this application; and

FIG. 23 is a diagram 2 of a structure of a communication apparatus according to an embodiment of this application.

## DESCRIPTION OF EMBODIMENTS

For ease of understanding, the following first describes technical terms in embodiments of this application.

1. Beam (beam)

As a communication resource, the beam is a special directional sending or receiving effect formed by a transmitter or a receiver of a network device or a terminal apparatus by using an antenna array, and is similar to a light beam formed by converging light to a direction by using a flashlight. Signal sending and receiving in a form of the beam can effectively increase a signal transmission distance.

Beams may be classified into a transmit beam and a receive beam. A technology of forming the beam may be a beamforming technology or another technical means. The beamforming includes transmit beamforming and receive beamforming. The beamforming technology may be specifically a digital beamforming technology, an analog beamforming technology, a hybrid digital/analog beamforming technology, or the like.

Transmit beam: The transmit beam is a beam that has a spatial directivity and that is formed by a signal sent by a transmit-end device by using a specific beamforming weight. In an uplink direction, the transmit-end device may be a terminal apparatus. In a downlink direction, the transmit-end device may be a network device.

Receive beam: The receive beam is a beam that has a spatial directivity and that is formed by a signal received by a receive-end device by using a specific beamforming weight. In an uplink direction, the receive-end device may be a network device. In a downlink direction, the receive-end device may be a terminal apparatus.

Transmit beamforming: When a transmit-end device with an antenna array sends a signal, a specific amplitude and phase are set on each antenna element of the antenna array, so that the sent signal has specific spatial directivity, that is, the signal has a high signal power in some directions, and has a low signal power in some other directions. A direction with a highest signal power is a direction of a transmit beam. The antenna array includes a plurality of antenna elements. The additional specific amplitude and phase are a beamforming weight.

Receive beamforming: When a receive-end device with an antenna array receives a signal, a specific amplitude and phase are set on each antenna element of the antenna array, so that a power gain of the received signal is directional, that is, the power gain is high when the signal is received in some directions, and the power gain is low when the signal is received in some other directions. A direction with a highest power gain when the signal is received is a direction of a receive beam. The antenna array includes a plurality of antenna elements. The additional specific amplitude and phase are a beamforming weight.

Sending a signal by using a transmit beam means sending the signal by using a beamforming weight. Receiving a signal by using a receive beam means receiving the signal by using a beamforming weight.

The beam may be a wide beam, a narrow beam, or another type of beam.

The beam usually corresponds to a resource. For example, during beam measurement, the network device measures different beams by using different resources, and the terminal apparatus feeds back measured resource quality, so that the network device can know quality of a corresponding beam. During data transmission, the beam may also be indicated by using the resource corresponding to the beam. For example, the network device indicates a transmission configuration indicator state (state) by using a transmission configuration index (transmission configuration index, TCI) field in downlink control information (downlink control information, DCI), and the terminal apparatus determines, based on a reference resource included in the TCI-state, a beam corresponding to the reference resource. Different beams may be considered as different resources, and same information or different information may be sent on (through) different beams.

The beam pair link is based on a beam concept. A beam pair link usually includes one transmit beam of a transmit-end device and one receive beam of a receive-end device. It should be noted that in the following description, unless otherwise specified, a transmit beam is a transmit beam of a network device, and a receive beam is a receive beam of a terminal.

In a communication system such as a 5G new radio (new radio, NR) system, the network device and the terminal apparatus each may generate one or more transmit beams and one or more receive beams. Before data transmission, the network device and the terminal apparatus need to perform beam alignment. In a communication protocol, the beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmit beam (transmit beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a receive beam (receive beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. It may be understood that embodiments of this application are uniformly described by using the beam, but the beam may be replaced with and understood as another equivalent concept, and is not limited to the foregoing mentioned concepts.

2. Resource

In a communication protocol, a reference signal is configured in a form of the resource. A network device configures each reference signal for a terminal apparatus in the form of the resource. One resource is one configuration information unit, and usually includes a parameter related to a reference signal, for example, a time-frequency resource position, a quantity of ports, and a time domain type (periodic/semi-static/aperiodic) of the reference signal.

The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information-reference signal (channel state information-reference signal, CSI-RS), a cell-specific reference signal (cell-specific reference signal, CS-RS), a UE-specific reference signal (user equipment-specific reference signal, US-RS), a demodulation reference signal (demodulation reference signal, DMRS), and a synchronization signal/physical broadcast channel block (synchronization system/physical broadcast channel block, SS/PBCH block). The SS/PBCH block may be referred to as a synchronization signal block (synchronization signal block, SSB) for short.

The resource may be configured by using a radio resource control (radio resource control, RRC) message. In terms of a configuration structure, one resource is one data structure, and includes a related parameter of an uplink/downlink signal corresponding to the resource, for example, a type of the uplink/downlink signal, a resource granularity carrying the uplink/downlink signal, sending time and a sending periodicity of the uplink/downlink signal, and a quantity of ports used to send the uplink/downlink signal. Each resource of the uplink/downlink signal has a unique identifier, to identify the resource of the downlink signal. It may be understood that the identifier of the resource may also be referred to as an identifier of the resource. This is not limited in embodiments of this application.

3. Beam management

In 5G, high-frequency communication may be used. That is, a high frequency band, such as a 28 gigahertz (GHz) signal, is used to perform data transmission. A major problem of the high-frequency communication is that signal energy decreases sharply with a transmission distance, resulting in a short signal transmission distance. To resolve this problem, an analog beam technology is used in the high-frequency communication. Weighted processing is performed on an antenna array, the signal energy is concentrated in a small angle range, to form a signal similar to a light beam (referred to as an analog beam, a beam for short), so that the transmission distance is extended.

Both a network device and a terminal apparatus need to perform transmission on the beam. In downlink transmission, a beam used by the network device is referred to as a downlink transmit beam, and a beam used by the terminal apparatus is referred to as a downlink receive beam. In uplink transmission, a beam used by the terminal apparatus is referred to as an uplink transmit beam, and a beam used by the network device is referred to as an uplink receive beam. In downlink transmission and uplink transmission, specific beams used by the network device and the terminal apparatus may be determined by using a beam management procedure.

Beam management means a process in which the network device and the terminal apparatus obtain and maintain a beam set used for sending and receiving, and is a reference workflow for beamforming in a multiple-input multiple-output (multiple-input multiple-output, MIMO) system. For example, the network device has M beams, and the terminal apparatus has N beams. A downlink beam management process is as follows:

(1) Beam sweeping (beam sweeping): The beam sweeping is a process in which the network device or the terminal apparatus sequentially selects, in a specified sweeping manner in a time period, a beam for sending or receiving, to cover a spatial region.

Specifically, the network device has M beams, and the terminal apparatus has N beams. The network device configures a parameter related to downlink beam management for the terminal apparatus, for example, including M measurement resources and a measurement periodicity. The measurement resource may be a reference signal (reference signal, RS) used for beam measurement. The M measurement resources are in one-to-one correspondence with the M beams of the network device. The network device sends a corresponding measurement resource by using each beam, and the terminal apparatus measures the measurement resource to determine quality of a beam corresponding to the measurement resource. It may be understood that a beam of the network device is invisible to the terminal apparatus, and the terminal apparatus may determine quality of each measurement resource. However, the terminal apparatus does not perceive a beam corresponding to the measurement resource.

2. Beam measurement (beam measurement): The beam measurement is a process in which the network device or the terminal apparatus measures a received beamforming signal.

Specifically, channel quality corresponding to a beam of each network device is different from channel quality corresponding to a beam of each terminal apparatus. The terminal apparatus needs to measure channel quality between a beam of each network device and a beam of each terminal apparatus, to determine which beam used by the network device for sending and which beam used by the terminal apparatus for receiving are preferred. Specifically, in each measurement periodicity, the network device sequentially sends a corresponding measurement resource by using the M beams, and the terminal apparatus performs receiving and measurement by using one of the N beams, to determine channel quality between a beam currently used by the terminal apparatus and the M beams, for example, a reference signal received power. In each measurement periodicity, the terminal apparatus sequentially performs receiving and measurement by using different beams, and may determine channel quality between the N beams of the terminal apparatus and the M beams of the network device through N measurement periodicities.

(3) Beam reporting (beam reporting): The beam reporting is a process in which the terminal apparatus reports a beam measurement result to the terminal apparatus.

Specifically, through beam measurement, the terminal apparatus may determine, based on channel quality, an optimal beam of the terminal apparatus corresponding to each measurement resource, in other words, an optimal receive beam of the terminal apparatus or an optimal receive beam. The terminal apparatus may report, to the network device, information about a measurement resource corresponding to the optimal beam of the terminal apparatus, so that the network device determines which beam used by the network device for sending and which beam used by the terminal apparatus for receiving are preferred. For example, if the network device performs downlink transmission by using a beam corresponding to a measurement resource, the terminal apparatus performs receiving by using a corresponding optimal beam. The information that is about the measurement resource and that is reported by the terminal apparatus may include identifiers and RSRPs of measurement resources corresponding to a maximum of four optimal beams of the terminal apparatus. The network device can determine, based on a correspondence between the M beams and the M measurement resources, a beam that is of the network device and that corresponds to a measurement resource identifier reported by the terminal apparatus. For example, the terminal apparatus may determine, through beam measurement, that four measurement resources with best quality are an RS #1, an RS #2, an RS #3, and an RS #4, and optimal beams of the terminal apparatus corresponding to the four measurement resources are respectively a beam B3, a beam B2, the beam B2, and a beam B1. In other words, in the four measurement resources received by the terminal apparatus on the beam B1, quality of the RS #4 is the best. In the four measurement resources received by the terminal apparatus on the beam B2, quality of the RS #2 and the RS #3 is the best. In the four measurement resources received by the terminal apparatus on the beam B3, quality of the RS #1 is the best. The terminal apparatus may report, to the network device, the RS #1, a reference signal received power (reference signal received power, RSRP) 1 corresponding to the RS #1, the RS #2, an RSRP 2 corresponding to the RS #2, the RS #3, an RSRP 3 corresponding to the RS #3, the RS #4, and an RSRP 4 corresponding to the RS #4.

(4) Beam determining (beam determining): The beam determining is a process in which the network device or the terminal apparatus selects a transmit beam or a receive beam of the network device or the terminal apparatus.

Specifically, after the terminal reports, to the network device, a measurement result corresponding to an optimal beam of the terminal, the terminal may maintain a mapping relationship between the optimal beam of the terminal and a measurement resource corresponding to the optimal beam of the terminal. For example, the mapping relationship may be shown in Table 1 below.

Table 1

| RS identifier | Optimal beam of a terminal |
|---------------|----------------------------|
| **RS** #1 | Beam B3 |
| RS #2 | Beam B2 |
| RS #3 | Beam B2 |
| RS #4 | Beam B1 |

Beam management may include three states, and the states are specifically as follows:

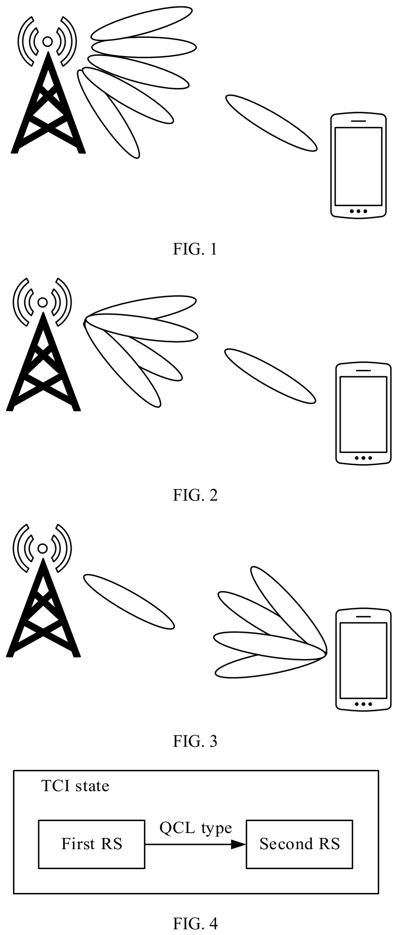

P1 state: As shown in FIG. 1, the terminal apparatus measures a beam set sent by the network device, and selects a transmit beam of the network device and a receive beam of the terminal apparatus.

P2 state: As shown in FIG. 2, based on P1, the terminal apparatus measures a narrower transmit beam set sent by the network device, to improve the transmit beam of the network device.

P3 state: As shown in FIG. 3, based on P1, the terminal apparatus measures a transmit beam of a same network device by using different receive beams, to improve the receive beam of the terminal apparatus.

It may be understood that a maximum of 64 beam directions may be configured for one network device, and each beam direction corresponds to one synchronization signal block and a time-frequency resource that is to be used by the terminal apparatus for beam reporting.

4. Antenna port (antenna port)

The antenna port may be defined as follows: A channel through which a signal on an antenna port passes may be derived from a channel through which another signal whose transmission is performed on the same antenna port passes. In other words, the antenna port defines a channel on a symbol. The antenna port is a logical concept. One antenna port may correspond to one transmit antenna, or may correspond to a plurality of antennas. The antenna port may be distinguished by using a reference signal (reference signal, RS) (or may be referred to as a pilot). In a downlink (a link on which the network device sends a signal to the terminal apparatus), the downlink is in one-to-one correspondence with a downlink reference signal. In an uplink, the uplink is in one-to-one correspondence with an uplink reference signal. If transmission of one reference signal is performed through a plurality of antennas, the plurality of antennas correspond to a same antenna port. If transmission of two different reference signals is performed through a same antenna, the antenna corresponds to two independent antenna ports.

It may be understood that the antenna port is different from an actually used physical antenna. A plurality of physical antennas may correspond to one antenna port, and one physical antenna may correspond to a plurality of antenna ports.

5. Quasi co-location (quasi Co-location, QCL)

Quasi co-location may be defined as follows: If a characteristic of a channel through which a signal on an antenna port passes can be derived from a channel through which a signal on another antenna port passes, it is considered that the two antenna ports are QCL, and in this case, there is a QCL relationship between RSs whose transmission is performed on the two antenna ports.

6. Transmission configuration indication (transmission configuration indication, TCI)

The TCI may indicate a QCL relationship between two RSs, that is, a QCL relationship between antenna ports corresponding to the two RSs. For example, it is assumed that the two RSs are a first RS and a second RS. As shown in FIG. 4, a gNB may configure a TCI state (TCI-State) for the first RS by using radio resource control (radio resource control, RRC) signaling. A UE side may determine, based on the TCI state, the second RS that has a QCL relationship with the first RS based on a QCL type (qcl-Type). The second RS may be a channel state information-reference signal (channel state information-reference signal, CSI-RS) or an SSB.

For signals from different transmission reception points (transmission reception points, TRPs), panels, or beams, after different TCI states are configured for the signals, the UE may determine a specific TRP, panel, or beam from which the signals come, and may also determine specific signals that come from a same TRP, panel, or beam.

In an air interface (Uu), the gNB may configure a plurality of TCI states for the UE by using RRC signaling, and then indicate a TCI state of an RS by using a medium access control (medium access control) control element (control element, CE) and/or downlink control information (downlink control information, DCI).

The QCL type may be one of {typeA, typeB, typeC, typeD}. A single QCL type may correspond to one or a combination of a plurality of channel characteristics. The channel characteristic may include a Doppler frequency shift, a Doppler spread, an average delay, a delay spread, a spatial reception parameter, and the like. The QCL type is described in detail below.

A channel characteristic of typeA may be {Doppler frequency shift, Doppler spread, average delay, delay spread}.

A channel characteristic of typeB may be {Doppler frequency shift, Doppler spread}.

A channel characteristic of typeC may be {Doppler frequency shift, average delay}.

A channel characteristic of typeD may be {spatial reception parameter}.

Based on the above, it can be learned that when two antenna ports are in a QCL relationship based on a QCL type, it is considered that characteristics of channels through which signals on the two antenna ports pass are the same as a channel characteristic corresponding to the QCL type. For example, the QCL type is typeD. The channel characteristic of the QCL type corresponds to a spatial reception parameter. Therefore, when two antenna ports are in a QCL relationship based on typeD, it is considered that channels through which signals on the two antenna ports pass have a same spatial reception parameter. It may be understood that all QCL relationships in embodiments of this application are based on typeD.

7. SL resource

In network coverage, the terminal apparatus may receive a system information block (system information block, SIB), cell-level (cell-specific) RRC signaling, or terminal apparatus user-level (UE-specific) RRC signaling of the network device, to obtain an SL resource. The SL resource may include SL resource pool (resource pool) configuration information and/or SL bandwidth part (bandwidth part, BWP) configuration information. Alternatively, the terminal apparatus may use pre-configured SL resource pool configuration information or SL BWP configuration information, for example, when the terminal apparatus is not in network coverage.

The SL resource pool configuration information may include resource pool resource information, and the resource pool resource information may indicate an SL resource pool. The SL resource pool may be a set of time-frequency resources, and the set of time-frequency resources may be used for sidelink communication between UEs. A resource in the SL resource pool may include a resource for sending and receiving at least one of the following physical channels by the terminal apparatus: a physical sidelink control channel (physical sidelink control channel, PSCCH), a physical sidelink shared channel (physical sidelink shared channel, PSSCH), and a physical sidelink feedback channel (physical sidelink feedback channel, PSFCH).

A PSCCH symbol is used to carry sidelink control information (sidelink control information, SCI).

A PSSCH symbol is used to carry at least one of control information, data, sidelink channel state information (channel state information, CSI) feedback information, or the like.

A PSFCH symbol is used to carry sidelink feedback information. The sidelink feedback information may include acknowledge feedback information of a hybrid automatic repeat request (hybrid automatic repeat request, HARQ), for example, an acknowledgment (acknowledge, ACK) or a negative acknowledgment (negative acknowledge, NACK). The sidelink feedback information may further include CSI feedback information. The sidelink feedback information may further indicate at least one of the following information: energy saving information, resource assistance information, or the like. This is not limited.

### 7. Sidelink channel state information-reference signal (SL CSI-RS)

An SL CSI-RS in an existing frequency range (Frequency Range, FR) 1 is designed based on a CSI-RS. An SL CSI-RS configuration is selected by a transmit user (TX UE), and is provided to a receive user (RX UE) by using a PC5-RRC configuration. The SL CSI-RS configuration may include a resource mapping mode and a quantity of antenna ports of the SL CSI-RS.

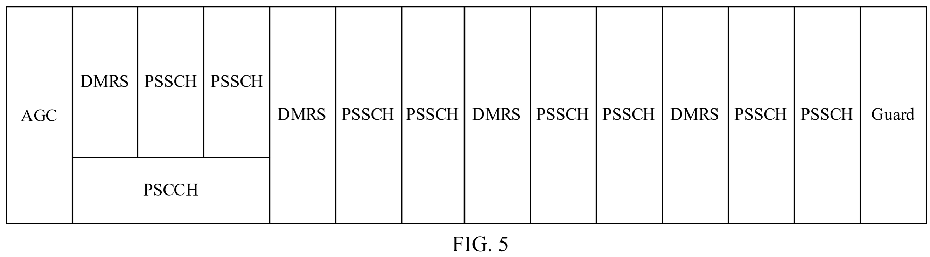

FIG. 5 is a diagram of an SL slot structure. As shown in FIG. 5, the SL slot structure may include automatic gain control (Automatic Gain Control, AGC), a PSCCH, a PSSCH, a DMRS, and the like. It may be understood that the SL CSI-RS supports only unicast transmission, and is sent with data in a PSSCH area of a sending slot. In addition, transmission of the SL CSI-RS is not performed on a symbol including a PSCCH, second-stage SCI, or a PSSCH DMRS, and each physical resource block (physical resource block, PRB) on the PSSCH uses a same mode for the SL CSI-RS.

It may be understood that for specific descriptions of the SL slot structure and the SL CSI-RS, refer to the related descriptions in the 3GPP protocol. Details are not described again.

### 8. Time-frequency resource of the PSSCH

Sidelink control information in an NR system may be classified into first-stage SCI and second-stage SCI. The PSCCH may carry the first-stage SCI, and the first-stage SCI is used to schedule the second-stage SCI and the PSSCH. The first-stage SCI may include a frequency domain resource assignment (frequency resource assignment) field, a time domain resource assignment (time resource assignment) field, and a resource reservation period (resource reservation period) field. The frequency domain resource assignment field may indicate a frequency domain resource for transmission of the PSSCH. The time domain resource assignment field may indicate a time domain resource for transmission of the PSSCH. The resource reservation period field may indicate that a resource for transmission of the PSSCH is periodically reserved. A value of the field may be configured, pre-configured, or pre-defined by the network device.

It may be understood that for specific descriptions of the time-frequency resource of the PSSCH, refer to the related descriptions in the 3GPP protocol. Details are not described again.

### 9. Time-frequency resource of the PSFCH

In an NR system, for one PSSCH transmission, if a transmit-end user carries HARQ-ACK feedback enabling information in control information, a receive-end user needs to feed back corresponding ACK/NACK information based on a current PSSCH decoding result. Transmission of the ACK/NACK information is performed through the PSFCH channel. A PSFCH channel resource is a periodic resource configured in a resource pool, and a periodicity configuration parameter $N_{PSSCH}^{PSFCH}$ of the PSFCH channel resource may be 0, 1, 2, or 4. $N_{PSSCH}^{PSFCH} = 0$ indicates that there is no PSFCH resource configuration in the resource pool, and PSFCH sending is not enabled in the resource, that is, physical layer HARQ feedback is not supported. $N_{PSSCH}^{PSFCH} = 1, 2, 4$ indicates that there is one PSFCH feedback slot in every $N_{PSSCH}^{PSFCH}$ SL slots in a time window.

It may be understood that for specific descriptions of the time-frequency resource of the PSFCH, refer to the related descriptions in the 3GPP protocol. Details are not described herein again.

### 10. Beam correspondence (beam correspondence) capability

The beam correspondence capability may be understood as that directions of a transmit beam and a receive beam of the terminal apparatus are consistent, or may be understood as that the terminal apparatus may determine a direction of a downlink beam (the receive beam) based on a direction of an uplink beam (the transmit beam).

Currently, beam management is a process in which a base station and a terminal apparatus obtain a transmit beam set and a receive beam set. Beam management mainly includes the following four steps: beam sweeping, beam measurement, beam reporting, and beam determining. The base station may determine a corresponding transmit beam and a corresponding receive beam in the four steps. Similarly, the terminal apparatus may also determine a corresponding transmit beam and a corresponding receive beam in the four steps. In a sidelink, the terminal apparatus may also determine a corresponding transmit beam and a corresponding receive beam in the four steps in the beam management.

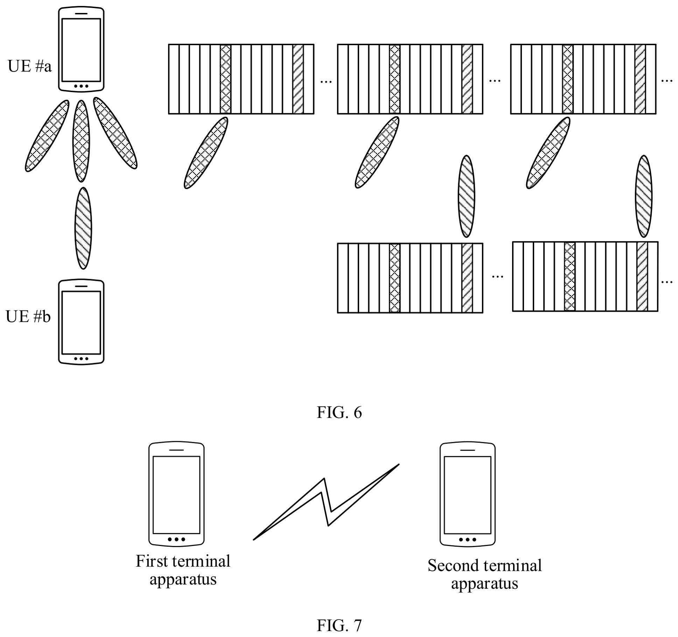

FIG. 6 is a diagram of SL beam sweeping. As shown in FIG. 6, a UE #a may sweep beams in different directions in each slot, in other words, the UE #a may perform transmit beam sweeping. A UE #b may send a feedback signal to the UE #a in a corresponding feedback slot by using a beam in a same direction, and the UE #a may determine a transmit beam based on the received feedback signal. In other words, the UE #a may determine, through transmit beam sweeping, a transmit beam corresponding to the UE #a. Similarly, the UE #b may also determine, through receive beam sweeping, a receive beam corresponding to the UE #b.

It may be understood that the UE #a can determine only a transmit beam in one transmit beam sweeping process, and the UE #b can determine only a receive beam in one receive beam sweeping process. However, when the UE #a and the UE #b need to perform reverse communication, that is, when the UE #b needs to send a signal to the UE #a, the UE #a further needs to perform receive beam sweeping again to determine a receive beam of the UE #a, and the UE #b further needs to perform transmit beam sweeping again to determine a transmit beam of the UE #b. Otherwise, the UE #b may fail to send a signal to the UE #a. In this case, reliability of communication between the UE #a and the UE #b is low.

In view of the foregoing technical problems, embodiments of this application provide the following technical solutions, to improve reliability of communication of the terminal apparatus in the SL.

The following describes technical solutions of this application with reference to the accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G, for example, a long term evolution (long term evolution, LTE) system, a worldwide interoperability for microwave access (worldwide interoperability for microwave access, WiMAX) communication system, 5G, for example, a new radio system, and a future communication system.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in embodiments of this application should not be explained as being more preferred or having more advantages than another embodiment or design scheme. Exactly, use of the expression "example" is intended to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in embodiments of this application may indicate an "or" relationship.

It may be understood that embodiments of this application, an "indication" may include a direct indication, an indirect indication, an explicit indication, or an implicit indication. When a piece of indication information indicates A, it may be understood as that the indication information carries A, directly indicates A, or indirectly indicates A.

In embodiments of this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be pre-defined, for example, pre-defined according to a protocol, or may be configured by a transmit-end device by sending configuration information to a receive-end device.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

For ease of understanding embodiments of this application, a communication system shown in FIG. 7 is first used as an example to describe in detail a communication system applicable to embodiments of this application. For example, FIG. 7 is a diagram of an architecture of a communication system to which a communication method is applicable according to an embodiment of this application.

As shown in FIG. 7, the communication system mainly includes a terminal apparatus.

There may be one or more terminal apparatuses, for example, a first terminal apparatus and a second terminal apparatus. The terminal apparatus may be a terminal apparatus having sending and receiving functions, or may be a chip or a chip system disposed in the terminal apparatus. The terminal apparatus may also be referred to as a user equipment (user equipment, UE), an access terminal apparatus, a subscriber unit (subscriber unit), a subscriber station, a mobile station (mobile station, MS), a mobile console, a remote station, a remote terminal apparatus, a mobile device, a user terminal apparatus, a terminal apparatus, a wireless communication device, a user agent, or a user apparatus. The terminal apparatus in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal apparatus, a computer having a wireless transceiver function, a virtual reality (virtual reality, VR) terminal apparatus, an augmented reality (augmented reality, AR) terminal apparatus, a smart home device (for example, a refrigerator, a television, an air conditioner, or a meter), a smart robot, a robotic arm, a workshop device, a wireless terminal apparatus in self driving, a wireless terminal apparatus in industrial control (industrial control), a wireless terminal apparatus in self driving (self driving), a wireless terminal apparatus in telemedicine (remote medical), a wireless terminal apparatus in a smart grid (smart grid), a wireless terminal apparatus in transportation safety (transportation safety), a wireless terminal apparatus in a smart city (smart city), a wireless terminal apparatus in a smart home (smart home), a vehicle-mounted terminal apparatus, a road side unit (road side unit, RSU) or the like having a function of the terminal apparatus, a flight device (for example, a smart robot, a hot air balloon, an uncrewed aerial vehicle, or an airplane), or the like. The terminal apparatus in this application may alternatively be a vehicle-mounted module, a vehicle-mounted assembly, a vehicle-mounted component, a vehicle-mounted chip, or a vehicle-mounted unit that is built in a vehicle as one or more components or units. The terminal apparatus may alternatively be another device having a function of the terminal apparatus. For example, the terminal apparatus may alternatively be a device that functions as a terminal apparatus in D2D communication.

A device form of the terminal apparatus is not limited in embodiments of this application. An apparatus configured to implement a function of the terminal apparatus may be a terminal apparatus, or may be an apparatus that can support the terminal apparatus in implementing the function, for example, a chip system. The apparatus may be mounted in the terminal apparatus or may be used with the terminal apparatus. In embodiments of this application, the chip system may include a chip, or may include a chip and another discrete component.

It may be understood that the terminal apparatus in the communication system is applicable to a communication scenario with network coverage and a communication scenario without network coverage. In other words, both the first terminal apparatus and the second terminal apparatus may be within network coverage; or the first terminal apparatus may be within network coverage, and the second terminal apparatus may be outside network coverage; or both the first terminal apparatus and the second terminal apparatus may be outside network coverage. This is not limited. It may be understood that the terminal apparatus in the communication system performs resource allocation in a mode 2 (mode 2). The mode 2 means that the terminal apparatus autonomously performs resource allocation based on sensing. In embodiments of this application, all terminal apparatuses perform resource allocation in the mode 2.

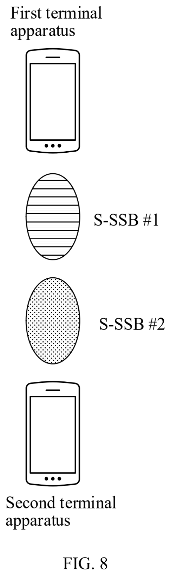

The communication system relates to beam training. As shown in FIG. 8, after an SL communication link is established between the first terminal apparatus and the second terminal apparatus, the first terminal apparatus and the second terminal apparatus may perform initial beam training with reference to the steps in "beam management" described above. The first terminal apparatus and the second terminal apparatus may use an SSB, an SL CSI-RS, or any other possible signal as a reference signal. This is not limited. For example, the first terminal apparatus and the second terminal apparatus perform beam training by using an SSB. The first terminal apparatus may determine a wide beam through initial beam training, and the wide beam is denoted as an S-SSB #1, where the S-SSB #1 may be used as a transmit beam of the first terminal apparatus, or may be used as a receive beam of the first terminal apparatus. The second terminal apparatus may determine a wide beam through initial beam training, and the wide beam is denoted as an S-SSB #2, where the S-SSB #2 may be used as a transmit beam of the second terminal apparatus, or may be used as a receive beam of the second terminal apparatus.

In the communication system, the first terminal apparatus may determine a transmit beam based on M first channel measurement results carried in M first signals, and determine a receive beam based on M second channel measurement results corresponding to the M first signals. Compared with existing beam management in which a terminal apparatus determines a transmit beam only based on a channel measurement result carried in a feedback signal, or determines a receive beam only based on a channel measurement result obtained by measuring a received reference signal, in this method, the first terminal apparatus may determine both a transmit beam and a receive beam for subsequent signal sending and receiving, so that reliability of communication of the first terminal apparatus can be improved. In addition, this method simplifies a beam management procedure, to reduce resource overheads and improve resource utilization.

It may be understood that FIG. 7 is a simplified diagram of an example for ease of understanding. The communication system may further include another terminal apparatus not drawn in FIG. 7.

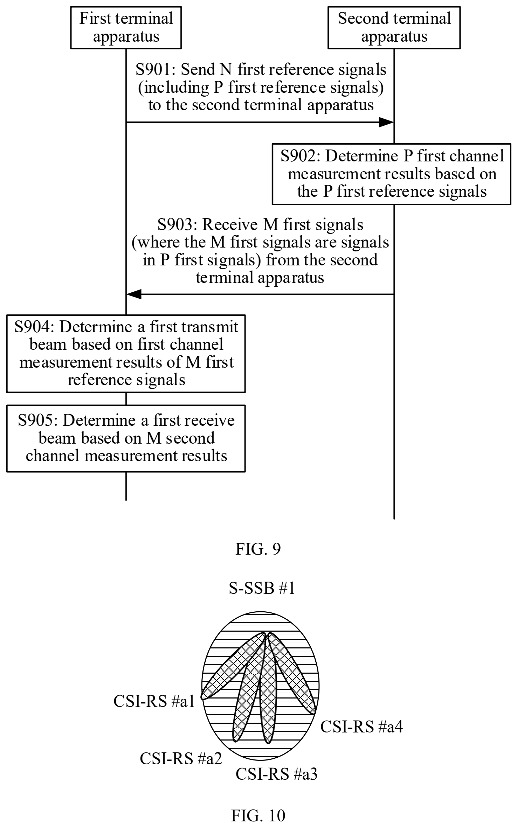

For ease of understanding, the following specifically describes, with reference to FIG. 9 to FIG. 21, communication methods provided in embodiments of this application.

For example, FIG. 9 is a schematic flowchart of a communication method according to an embodiment of this application. The method is applicable to interaction between the first terminal apparatus and the second terminal apparatus in the foregoing communication system.

Specifically, as shown in FIG. 9, a procedure of the communication method is as follows.

S901: Send N first reference signals to the second terminal apparatus. The second terminal apparatus receives P first reference signals from the first terminal apparatus. S901 may be performed by the first terminal apparatus.

The first reference signal may be a signal used for channel measurement in an SL, for example, an SL CSI-RS, a demodulation reference signal (demodulation reference signal, DMRS), a phase tracking reference signal (phase tracking reference signal, PT-RS), a Gold sequence, a sidelink secondary synchronization signal (sidelink secondary synchronization signal, S-SSS), a sidelink primary synchronization signal (sidelink primary synchronization signal, S-PSS), or a ZC (Zadoff-Chu) sequence. The DMRS, the PT-RS, and the SL CSI-RS may be carried on a PSSCH, and the S-SSS, the P-SSS, the ZC sequence, or the Gold sequence is not limited to a time-frequency resource or a channel. It may be understood that the first reference signal may alternatively be any other possible signal. This is not limited. In this embodiment of this application, an example in which the second reference signal is an SL CSI-RS is used for subsequent description.

The N first reference signals may be N SL CSI-RSs. The N SL CSI-RSs may be carried in N beams in different directions. In other words, the first terminal apparatus may perform transmit beam sweeping by using the N beams in different directions. The N beams in different directions may be denoted as a transmit beam set #1. The transmit beam set #1 may include {CSI-RS #a1, CSI-RS #a2, CSI-RS #a3, CSI-RS #a4, ..., CSI-RS #aN}. In other words, the CSI-RS #a1, the CSI-RS #a2, the CSI-RS #a3, the CSI-RS #a4, ..., and the CSI-RS #aN may represent the N beams in different directions. A first reference signal carried in the CSI-RS #a1 may be denoted as an SL CSI-RS #a1, a first reference signal carried in the CSI-RS #a2 may be denoted as an SL CSI-RS #a2, a first reference signal carried in the CSI-RS #a3 may be denoted as an SL CSI-RS #a3, a first reference signal carried in the CSI-RS #a4 may be denoted as an SL CSI-RS #a4, ..., and a first reference signal carried in the CSI-RS #aN may be denoted as an SL CSI-RS #aN, where N is an integer greater than 1. As shown in FIG. 10, {CSI-RS #a1, CSI-RS #a2, CSI-RS #a3, CSI-RS #a4, ..., CSI-RS #aN} in the transmit beam set #1 may be in a QCL relationship with the S-SSB #1. In other words, the CSI-RS #1, the CSI-RS #2, the CSI-RS #3, the CSI-RS #4, ..., and the CSI-RS #N may be N narrow beams split from the S-SSB #1, or a reference signal and a beam in the transmit beam set #1 are indicated, configured, or (pre-)configured by another terminal apparatus, or determined by a terminal apparatus. This is not limited in this embodiment of this application. It can be learned from the related descriptions of the foregoing technical terms that the SL CSI-RS may be carried on the PSSCH, that is, the SL CSI-RS may be carried in a time-frequency resource of an SL PSSCH. It may be understood that one SL slot may carry a plurality of SL CSI-RSs. Therefore, the N SL CSI-RSs may be separately carried on time-frequency resources of the PSSCH in one or more SL slots. It is assumed that the N SL CSI-RSs are separately carried on time-frequency resources of the PSSCH in N SL slots. The N SL slots may be referred to as a sending slot corresponding to the N SL CSI-RSs, denoted as a sending slot #1. In other words, the sending slot #1 may be a slot set including the N SL slots. In this case, the first terminal apparatus may send the N SL CSI-RSs to the second terminal apparatus in the sending slot #1 by using the transmit beam set #1.

It may be understood that the N SL CSI-RSs sent by the first terminal apparatus may be affected by factors such as a loss in a transmission path, a beam direction, and a beam gain. Therefore, the second terminal apparatus may receive less than N SL CSI-RSs. For example, the second terminal apparatus may receive P SL CSI-RSs from the first terminal apparatus in a corresponding slot by using the S-SSB #2, or the second terminal apparatus may receive P SL CSI-RSs from the first terminal apparatus in a corresponding slot by using a beam indicated by the first terminal apparatus. P may be an integer less than or equal to N, and P is greater than 1. This is not limited.

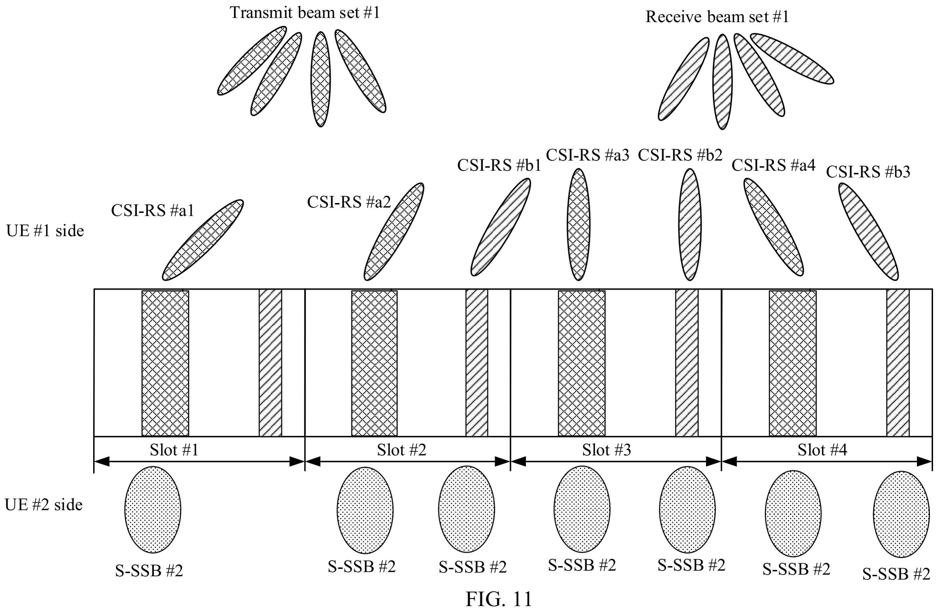

For example, FIG. 11 is a diagram in which a first terminal apparatus performs transmit beam sweeping and receive beam sweeping according to an embodiment of this application. As shown in FIG. 11, the transmit beam set #1 includes four beams in different directions, respectively denoted as the CSI-RS #a1, the CSI-RS #a2, the CSI-RS #a3, and the CSI-RS #a4. A UE #1 (the first terminal apparatus) may send the SL CSI-RS #a1 in a slot #1 by using the CSI-RS #a1, the UE #1 may send the SL CSI-RS #a2 in a slot #2 by using the CSI-RS #a2, the UE #1 may send the SL CSI-RS #a3 in a slot #3 by using the CSI-RS #a3, and the UE #1 may send the SL CSI-RS #a4 in a slot #4 by using the CSI-RS #a4.

Assuming that the second terminal apparatus may receive three first reference signals: the SL CSI-RS #a1, the SL CSI-RS #a2, and the SL CSI-RS #a3, a UE #2 (the second terminal apparatus) may receive the SL CSI-RS #a1 in the slot #1 by using the S-SSB #2, the UE #2 may receive the SL CSI-RS #a2 in the slot #2 by using the S-SSB #2, and the UE #2 may receive the S-SSB #2 and the SL CSI-RS #a3 in the slot #3 by using the S-SSB #2. In this case, the UE #2 fails to receive the SL CSI-RS #a4 sent on the CSI-RS #a4. It may be understood that FIG. 11 corresponds to a scenario in which N is equal to 4 and P is equal to 3.

S902: Determine P first channel measurement results based on the P first reference signals. S902 may be performed by the first terminal apparatus.

The first channel measurement result may include at least one or more of a reference signal received power (reference signal received power, RSRP), reference signal received quality (reference signal received quality, RSRQ), a received signal strength indicator (received signal strength indicator, RSSI), a signal to interference plus noise ratio (signal to interference plus noise ratio, SINR), and the like. This is not limited. For ease of understanding, in this embodiment of this application, an example in which first channel measurement information includes an RSRP is used for subsequent description. To be specific, the second terminal apparatus may perform signal measurement on the P SL CSI-RSs, to obtain RSRPs respectively corresponding to the P SL CSI-RSs, and the RSRPs are denoted as P first RSRPs.

For example, still referring to the foregoing embodiment, as shown in FIG. 11, the UE #2 may measure the SL CSI-RS #a1 to obtain a first RSRP #1, the UE #2 may measure the SL CSI-RS #a2 to obtain a first RSRP #2, and the UE #2 may measure the SL CSI-RS #a3 to obtain a first RSRP #3.

S903: Receive M first signals from the second terminal apparatus. The second terminal apparatus sends P first signals to the first terminal apparatus. S903 may be performed by the first terminal apparatus.

The first signal may be a signal corresponding to a first reference signal. In other words, the first signal carries an RSRP of a first reference signal corresponding to the first signal, the P first RSRPs are carried in the P first signals in one-to-one correspondence, and the second terminal apparatus may send the P first RSRPs to the first terminal apparatus by using the P first signals.

The first signal may be carried on a PSFCH. A time-frequency resource of the PSFCH may be pre-configured, pre-defined, or configured by another apparatus. This is not limited. It can be learned from the related descriptions of the foregoing technical terms that there is a resource mapping relationship between an SL PSFCH and the PSFCH. Therefore, the P first signals may be separately carried in a PSSCH area of P SL slots. The P SL slots may be referred to as a sending slot corresponding to the P first signals, denoted as a sending slot #2. In other words, the sending slot #2 may be a slot set including the P SL slots. In this case, the second terminal apparatus may send the P first signals to the first terminal apparatus in the sending slot #2 by using the S-SSB #2.

It may be understood that the P first signals sent by the second terminal apparatus may be affected by factors such as a loss in a transmission path, a beam direction, and a beam gain. Therefore, the first terminal apparatus may receive less than P first signals. For example, the first terminal apparatus receives the M first signals, where the M first signals may be signals in the P first signals, that is, M may be an integer less than or equal to P. In this case, the M first signals may carry first RSRPs of M first reference signals corresponding to the M first signals.

It is assumed that the first terminal apparatus performs receive beam sweeping by using H beams in different directions. The H beams in different directions may be denoted as a receive beam set #1, and the receive beam set #1 may include {CSI-RS #b1, CSI-RS #b2, CSI-RS #b3, CSI-RS #b4, ..., CSI-RS #bH}. In this case, the first terminal apparatus may receive a first signal on P beams in the H beams. H may be an integer greater than 1, and P may be an integer less than or equal to H. This is not limited.

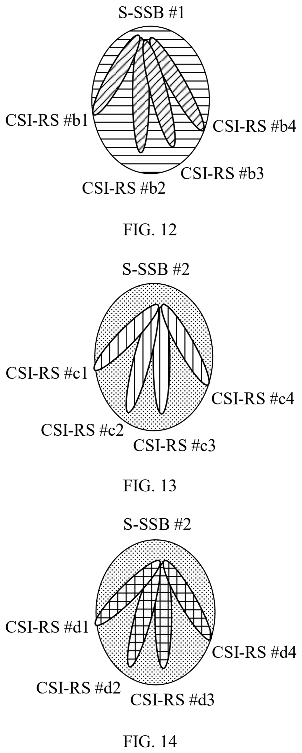

As shown in FIG. 12, it may be understood that, {CSI-RS #b1, CSI-RS #b2, CSI-RS #b3, CSI-RS #b4, ..., CSI-RS #bN} in the receive beam set #1 may be in a QCL relationship with the S-SSB #1. In other words, the CSI-RS #b1, the CSI-RS #b2, the CSI-RS #b3, the CSI-RS #b4, ..., and the CSI-RS #bN may be N narrow beams split from the S-SSB #1, or a reference signal and a beam in the receive beam set #1 are indicated, configured, or (pre-)configured by another terminal apparatus, or determined by a terminal apparatus. This is not limited in this embodiment of this application.

For example, still referring to the foregoing embodiment, as shown in FIG. 11, three first signals may be respectively denoted as a first signal #1, a first signal #2, and a first signal #3. The first signal #1 may carry the first RSRP #1, the second signal #2 may carry the first RSRP #2, and the first signal #3 may carry the first RSRP #3. It is assumed that the UE #2 may send the first signal #1 in the slot #2 by using the S-SSB #2, the UE #2 may send the first signal #2 in the slot #3 by using the S-SSB #2, and the UE #2 may send the first signal #3 in the slot #4 by using the S-SSB #2.

It is assumed that the receive fine beam set #1 includes four beams in different directions, respectively denoted as the CSI-RS #b1, the CSI-RS #b2, the CSI-RS #b3, and the CSI-RS #b4. If the CSI-RS #b1, the CSI-RS #b2, and the CSI-RS #b3 each may be used to receive a first signal, the UE #1 may receive the first signal #1 in the slot #2 by using the CSI-RS #b1, the UE #1 may receive the first signal #2 in the slot #3 by using the CSI-RS #b2, and the UE #1 may receive the first signal #3 in the slot #4 by using the CSI-RS #b3. In this case, all the three first signals sent by the UE #2 may be received by the UE #1, and the UE #1 fails to receive a first signal by using the CSI-RS #b4. It may be understood that FIG. 11 corresponds to a scenario in which P is equal to 3 and M is equal to 3.

S904: Determine a first transmit beam based on first channel measurement results of the M first reference signals. S904 may be performed by the first terminal apparatus. The first terminal apparatus may determine a first channel measurement result set based on the first channel measurement results of the M first reference signals and a first preset threshold. The first channel measurement result set may include a first channel measurement result that is in the first channel measurement results of the M first reference signals and that is greater than or equal to the first preset threshold, where the first preset threshold may be denoted as G1. In other words, the second terminal apparatus may determine an RSRP that is in the M first RSRPs and that is greater than or equal to G1 as the first channel measurement result set. It may be understood that the first preset threshold may be selected based on a scenario. This is not limited.

The first terminal apparatus may determine a first transmit beam set based on the first channel measurement result set. It may be understood that each first RSRP corresponds to one SL CSI-RS, the M first RSRPs are in one-to-one correspondence with M SL CSI-RSs, and the M SL CSI-RSs are in one-to-one correspondence with M beams in the transmit beam set #1. Therefore, the second terminal apparatus may determine the first transmit beam set based on a beam of an SL CSI-RS corresponding to each first RSRP in the first channel measurement result set. The first transmit beam may be any transmit beam in the first transmit beam set. This is not limited.

Optionally, the first terminal apparatus may further determine the first transmit beam based on the first channel measurement results of the M first reference signals and the first preset threshold.

The first transmit beam may be a transmit beam corresponding to a largest first channel measurement result that is in the first RSRPs of the M first reference signals and that is greater than or equal to the first preset threshold. In other words, the first terminal apparatus may use a beam corresponding to a largest first RSR in the M first RSRPs as the first transmit beam.

The first transmit beam may be used to send a signal, that is, the first terminal apparatus may send a signal to the second terminal apparatus by using the first transmit beam.

For example, still referring to the foregoing embodiment, as shown in FIG. 11, if the first RSRP #1 and the first RSRP #3 in the first RSRP #1, the first RSRP #2, and the first RSRP #3 are greater than G1, the first channel measurement result set may include the first RSRP #1 and the first RSRP #3. Based on the above, it can be learned that the first RSRP #1 is in one-to-one correspondence with the SL CSI-RS #a1, and the SL CSI-RS #a1 is in one-to-one correspondence with the CSI-RS #a1. Therefore, the CSI-RS #a1 may be a transmit beam in the first transmit beam set. Similarly, the first RSRP #3 is in one-to-one correspondence with the SL CSI-RS #a3, and the SL CSI-RS #a3 is in one-to-one correspondence with the CSI-RS #a3. Therefore, the CSI-RS #a3 may be a transmit beam in the first transmit beam set. In this case, the first transmit beam may be the CSI-RS #a1 or the CSI-RS #a3. If the first RSRP #3 is greater than the first RSRP #1, the CSI-RS #a3 may be considered as an optimal transmit beam of the UE #1. For ease of understanding, in this embodiment of this application, an example in which the first transmit beam is the CSI-RS #a3 is used for subsequent description.

S905: Determine a first receive beam based on M second channel measurement results. S905 may be performed by the first terminal apparatus.

The second channel measurement result may be a channel measurement result of the first signal obtained by the first terminal apparatus, and the second channel measurement result may include an RSRP, RSRQ, an RSSI, an SINR, and the like. This is not limited. For ease of understanding, in this embodiment of this application, an example in which second channel measurement information includes an RSRP is used for subsequent description. To be specific, the second terminal apparatus may perform signal measurement on the M first signals, to obtain RSRPs corresponding to the M first signals, and the RSRPs are denoted as M second RSRPs.

The first terminal apparatus may determine a second channel measurement result set based on the M second RSRPs and a second preset threshold. The second channel measurement result set may include a second channel measurement result that is in the M second RSRPs and that is greater than or equal to the second preset threshold, where the second preset threshold may be denoted as G2. In other words, the second terminal apparatus may determine an RSRP that is in the M second RSRPs and that is greater than or equal to G2 as the second channel measurement result set. It may be understood that the first preset threshold may be selected based on a scenario. This is not limited. The first terminal apparatus may determine a first receive beam set based on the second channel measurement result set. It may be understood that each second RSRP corresponds to one first signal, the M second RSRPs are in one-to-one correspondence with the M first signals, and the M first signals are in one-to-one correspondence with M beams in the receive beam set #1. Therefore, the second terminal apparatus may determine the first receive beam set based on a beam of a first signal corresponding to a second RSRP in the second channel measurement result set. The first receive beam may be any receive beam in the first receive beam set. This is not limited.

Optionally, the first terminal apparatus may further determine the first receive beam based on the M second channel measurement results and the second preset threshold.

The first receive beam may be a receive beam corresponding to a largest second channel measurement result that is in the M second channel measurement results and that is greater than or equal to the second preset threshold. In other words, the first terminal apparatus may use a beam corresponding to a largest second RSRP in the M second RSRPs as the first receive beam.

The first receive beam may be used to receive a signal, that is, the first terminal apparatus may receive a signal from the second terminal apparatus by using the first receive beam.

For example, still referring to the foregoing embodiment, as shown in FIG. 11, the UE #1 may measure the first signal #1 to obtain a second RSRP #1, the UE #2 may measure the first signal #2 to obtain a second RSRP #2, and the UE #2 may measure the first signal #2 to obtain a second RSRP #3. If the second RSRP #1 and the second RSRP #2 in the second RSRP #1, the second RSRP #2, and the second RSRP #3 are greater than G2, the second channel measurement result set may include the second RSRP #1 and the second RSRP #2. Based on the above, it can be learned that the second RSRP #1 is in one-to-one correspondence with the first signal #1, and the first signal #1 is in one-to-one correspondence with the CSI-RS #b1. Therefore, the CSI-RS #b1 may be a receive beam in the first receive beam set. Similarly, the first RSRP #2 is in one-to-one correspondence with the first signal #2, and the first signal #2 is in one-to-one correspondence with the CSI-RS #b2. Therefore, the CSI-RS #b2 may be a receive beam in the first receive beam set. In this case, the first transmit beam may be the CSI-RS #b1 or the CSI-RS #b2. If the second RSRP #2 is greater than the second RSRP #1, the CSI-RS #b2 may be considered as an optimal receive beam of the UE #1. For ease of understanding, in this embodiment of this application, an example in which the first receive beam is the CSI-RS #b2 is used for subsequent description.

In conclusion, the first terminal apparatus may determine a transmit beam based on M first channel measurement results carried in M first signals, and determine a receive beam based on M second channel measurement results corresponding to the M first signals. Compared with existing beam management in which a terminal apparatus determines a transmit beam only based on a channel measurement result carried in a feedback signal, or determines a receive beam only based on a channel measurement result obtained by measuring a received reference signal, in this method, the first terminal apparatus may determine both a transmit beam and a receive beam for subsequent signal sending and receiving, so that reliability of communication of the first terminal apparatus can be improved. In addition, this method simplifies a beam management procedure, to reduce resource overheads and improve resource utilization.

With reference to the foregoing embodiment, optionally, after the first terminal apparatus determines a target transmit beam and a target receive beam of the first terminal apparatus based on M pieces of first channel measurement information and M pieces of second channel measurement information, the method may further include:

The second terminal apparatus sends Q second reference signals to the first terminal apparatus. The first terminal apparatus receives X second reference signals from the second terminal apparatus.

The first terminal apparatus determines X third channel measurement results based on the X second reference signals.

The first terminal apparatus sends X second signals to the second terminal apparatus. The second terminal apparatus receives Z second signals from the first terminal apparatus.

The second reference signal may be a signal used for channel measurement in an SL, for example, an SL CSI-RS, a DMRS, a PT-RS, a Gold sequence, an S-SSS, a P-SSS, or a ZC sequence. It may be understood that the second reference signal may alternatively be any other possible signal. This is not limited. In this embodiment of this application, an example in which the second reference signal is an SL CSI-RS is used for subsequent description.

The Q second reference signals may be Q SL CSI-RSs. The Q SL CSI-RSs may be carried in Q beams in different directions. The Q beams in different directions may be denoted as a transmit fine beam set #2. In other words, the second terminal apparatus may perform transmit beam sweeping by using the Q beams in different directions. The Q beams in different directions may be denoted as a transmit beam set #2. The transmit beam set #2 may include {CSI-RS #c1, CSI-RS #c2, CSI-RS #c3, CSI-RS #c4, ..., CSI-RS #cQ}. In other words, the CSI-RS #c1, the CSI-RS #c2, the CSI-RS #c3, the CSI-RS #c4, ..., and the CSI-RS #cQ may represent the Q beams in different directions. A second reference signal carried in the CSI-RS #c1 may be denoted as an SL CSI-RS #c1, a second reference signal carried in the CSI-RS #c2 may be denoted as an SL CSI-RS #c2, a second reference signal carried in the CSI-RS #c3 may be denoted as an SL CSI-RS #c3, a second reference signal carried in the CSI-RS #c4 may be denoted as an SL CSI-RS #c4, ..., and a second reference signal carried in the CSI-RS #cQ may be denoted as an SL CSI-RS #cQ, where Q is an integer greater than 1.

As shown in FIG. 13, {CSI-RS #c1, CSI-RS #c2, CSI-RS #c3, CSI-RS #c4, ..., CSI-RS #cQ} in the transmit beam set #2 may be in a quasi co-location relationship with the S-SSB #2. In other words, the CSI-RS #11, the CSI-RS #22, the CSI-RS #33, the CSI-RS #44, ..., and the CSI-RS #QQ may be N narrow beams split from the S-SSB #2, or a reference signal and a beam in the transmit beam set #2 are indicated, configured, or (pre-)configured by another terminal apparatus, or determined by a terminal apparatus. This is not limited in this application.

It can be learned from the related content in S901 that the SL CSI-RS may be carried on the PSSCH, that is, the SL CSI-RS may be carried in a time-frequency resource of the SL PSSCH. Therefore, the Q SL CSI-RSs may be separately carried on time-frequency resources of the PSSCH in one or more SL slots. It is assumed that the Q SL CSI-RSs are separately carried on time-frequency resources of the PSSCH in Q SL slots. The Q SL slots may be referred to as a sending slot corresponding to the Q second reference signals, denoted as a sending slot #3. In other words, the sending slot #3 may be a slot set including the Q SL slots. In this case, the second terminal apparatus may send the Q SL CSI-RSs to the first terminal apparatus in the sending slot #3 by using the transmit beam set #2. It may be understood that the Q SL CSI-RSs sent by the second terminal apparatus may also be affected by factors such as a loss in a transmission path, a beam direction, and a beam gain. Therefore, the first terminal apparatus may receive less than Q SL CSI-RSs. For example, the first terminal apparatus may receive X SL CSI-RSs from the second terminal apparatus in a corresponding slot by using the CSI-RS #b2 or the S-SSB #1, or the first terminal apparatus may receive X SL CSI-RSs from the second terminal apparatus in a corresponding slot by using a beam indicated by the second terminal apparatus. X may be an integer less than or equal to Q, and X is greater than 1. This is not limited.

The third channel measurement result may be at least one or more of an RSRP, RSRQ, an RSSI, an SINR, and the like. This is not limited. For ease of understanding, in this embodiment of this application, an example in which third channel measurement information includes an RSRP is used for subsequent description. To be specific, the second terminal apparatus may perform signal measurement on the X SL CSI-RSs, to determine RSRPs respectively corresponding to the X SL CSI-RSs, and the RSRPs may be denoted as X third RSRPs.

The second signal may be a signal corresponding to a second reference signal. In other words, the second signal carries an RSRP of a second reference signal corresponding to the second signal, the X third RSRPs are carried in the X second signals in one-to-one correspondence, and the first terminal apparatus may send the X third RSRPs to the second terminal apparatus by using the X second signals.

The second signal is similar to the first signal. The second signal may also be carried on the PSFCH. The X second signals may be respectively carried in a PSSCH area of X SL slots. The X SL slots may be referred to as a sending slot corresponding to the X second signals, denoted as a sending slot #4. In other words, the sending slot #4 may be a slot set including the X SL slots. In this case, the first terminal apparatus may send the X third RSRPs to the second terminal apparatus in the sending slot #4 by using the S-SSB #1. For specific descriptions of the second signal, refer to the related descriptions of the first signal in step S903. Details are not described again.

It may be understood that the X second reference signals sent by the first terminal apparatus may be affected by factors such as a loss in a transmission path, a beam direction, and a beam gain. Therefore, the second terminal apparatus may receive less than X second signals. For example, the first terminal apparatus receives the Z second signals, where the Z second signals may be signals in the X second signals, that is, Z may be an integer less than or equal to X. In this case, the Z second signals may carry third RSRPs of Z second reference signals corresponding to the Z second signals.

It is assumed that the second terminal apparatus performs receive beam sweeping by using U beams in different directions. The U beams in different directions may be denoted as a receive beam set #2, and the receive beam set #2 may include {CSI-RS #d1, CSI-RS #d2, CSI-RS #d3, CSI-RS #d4, ..., CSI-RS #dU}. In this case, the second terminal apparatus may receive a second signal on Z beams in the U beams. U may be an integer greater than 1, and Z may be an integer less than or equal to U. This is not limited.

As shown in FIG. 14, it may be understood that, {CSI-RS #d1, CSI-RS #d2, CSI-RS #d3, CSI-RS #d4, ...,

CSI-RS #dN} in the receive beam set #2 may be in a QCL relationship with the S-SSB #2. In other words, the CSI-RS #d1, the CSI-RS #d2, the CSI-RS #d3, the CSI-RS #d4, ..., and the CSI-RS #dN may be d narrow beams split from the S-SSB #2, or a reference signal and a beam in the receive beam set #2 are indicated, configured, or (pre-)configured by another terminal apparatus, or determined by a terminal apparatus. This is not limited in this embodiment of this application.

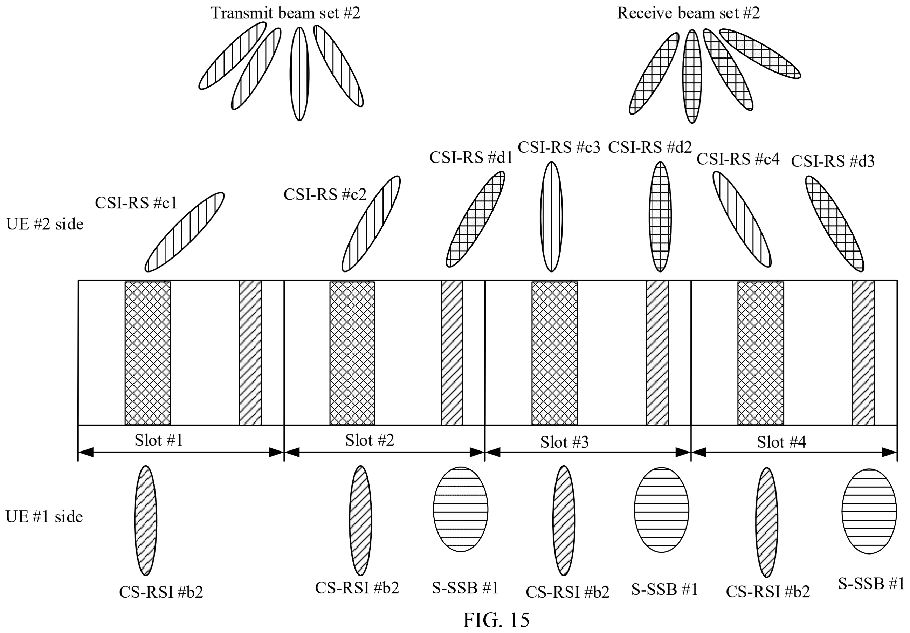

For example, FIG. 15 is a diagram in which a second terminal apparatus performs transmit beam sweeping and receive beam sweeping according to an embodiment of this application. As shown in FIG. 15, it is assumed that the transmit beam set #2 includes four beams in different directions, respectively denoted as the CSI-RS #c1, the CSI-RS #c2, the CSI-RS #c3, and the CSI-RS #c4. The UE #2 may send the SL CSI-RS #c1 in the slot #1 by using the CSI-RS #c1, the UE #2 may send the SL CSI-RS #c2 in the slot #2 by using the CSI-RS #c2, the UE #2 may send the SL CSI-RS #c3 in the slot #3 by using the CSI-RS #c3, and the UE #1 may send the SL CSI-RS #c4 in the slot #4 by using the CSI-RS #c4.

Assuming that the UE #1 may receive three second reference signals: the SL CSI-RS #c1, the SL CSI-RS #c2, and the SL CSI-RS #c3, the UE #1 may receive the SL CSI-RS #c1 in the slot #1 by using the CSI-RS #b2 or the S-SSB #1, the UE #1 may receive the SL CSI-RS #c2 in the slot #2 by using the CSI-RS #b2 or the S-SSB #1, and the UE #1 may receive the SL CSI-RS #c3 in the slot #3 by using the CSI-RS #b2 or the S-SSB #1. In this case, the UE #1 fails to receive the SL CSI-RS #c4 on the CSI-RS #c4.

The UE #1 may measure the SL CSI-RS #c1 to obtain a third RSRP #1, the UE #1 may measure the SL CSI-RS #c2 to obtain a third RSRP #2, and the UE #1 may measure the SL CSI-RS #c3 to obtain a third RSRP #3. The third RSRP #1 may be carried in a second signal #1, the third RSRP #2 may be carried in a second signal #2, and the third RSRP #3 may be carried in a second signal #3. It is assumed that the UE #1 may send the second signal #1 in the slot #2 by using the S-SSB #1, the UE #1 may send the second signal #2 in the slot #3 by using the S-SSB #1, and the UE #1 may send the second signal #3 in the slot #4 by using the S-SSB #1.

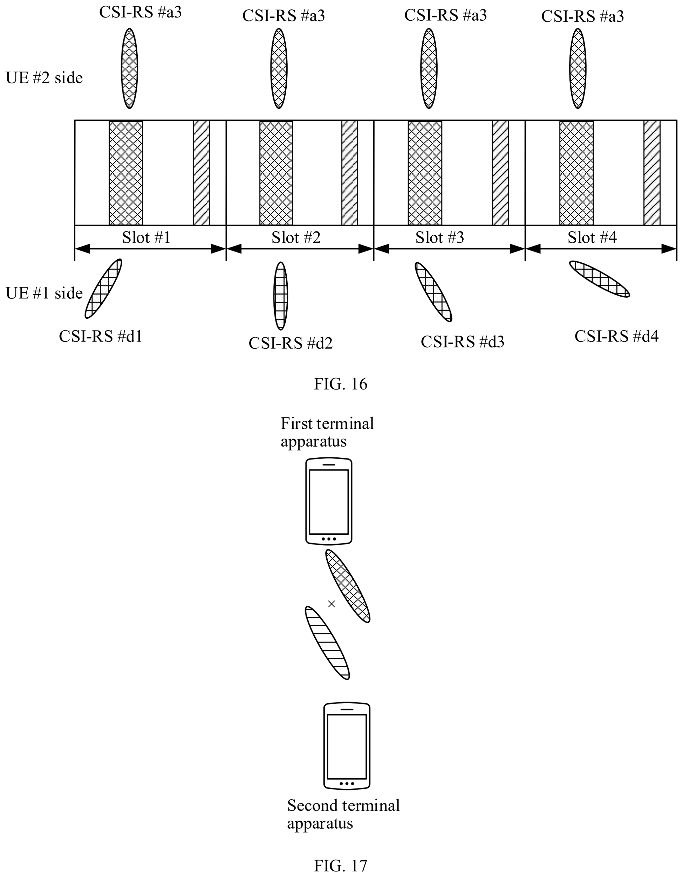

It is assumed that the receive fine beam set #2 includes four beams in different directions, respectively denoted as the CSI-RS #d1, the CSI-RS #d2, the CSI-RS #d3, and the CSI-RS #d4. If the CSI-RS #d1, the CSI-RS #d2, and the CSI-RS #d3 each may be used to receive a second signal, the UE #2 may receive the second signal #1 in the slot #2 by using the CSI-RS #d1, the UE #2 may receive the second signal #2 in the slot #3 by using the CSI-RS #d2, and the UE #2 may receive the second signal #3 in the slot #4 by using the CSI-RS #d3. In this case, all the three second signals sent by the UE #1 may be received by the UE #2, and the UE #1 fails to receive a second signal by using the CSI-RS #d4. It may be understood that FIG. 16 corresponds to a scenario in which Q is equal to 4, X is equal to 3, and Z is equal to 3.

Optionally, after the Z second signals from the first terminal apparatus are received, the method may further include:

The first terminal apparatus sends Y third reference signals to the second terminal apparatus. The second terminal apparatus receives R third reference signals from the first terminal apparatus.

The third reference signal may be a signal used for channel measurement in an SL, for example, an SL CSI-RS #a3, a DMRS, a PT-RS, a Gold sequence, an S-SSS, a P-SSS, or a ZC sequence. It may be understood that the third reference signal may alternatively be any other possible signal. This is not limited. In this embodiment of this application, an example in which the third reference signal is an SL CSI-RS is used for subsequent description.

The Y third reference signals may be Y SL CSI-RSs, and the Y SL CSI-RSs may be respectively denoted as an SL CSI-RS #c1, SL CSI-RS #c2, SL CSI-RS #c3, an SL CSI-RS #c4, ..., and an SL CSI-RS #Cn. The Y SL CSI-RSs may be carried in beams in a same direction, for example, the CSI-RS #a3. It can be learned from the related content in S901 that the SL CSI-RS may be carried on the PSSCH. Therefore, the Y SL CSI-RSs may be separately carried on time-frequency resources of the PSSCH in one or more SL slots. It is assumed that the Y SL CSI-RSs are separately carried on time-frequency resources of the PSSCH in Y SL slots. The Y SL slots may be referred to as a sending slot corresponding to the Y third reference signals, denoted as a sending slot #5. In other words, the sending slot #5 may be a slot set including the Y SL slots. In this case, the first terminal apparatus may send the Y SL CSI-RSs to the second terminal apparatus in the sending slot #5 by using the SL CSI-RS #a3.

It may be understood that the Y third reference signals sent by the first terminal apparatus may be affected by factors such as a loss in a transmission path, a beam direction, and a beam gain. Therefore, the second terminal apparatus may receive less than Y third reference signals. For example, the second terminal apparatus receives the R third reference signals. R may be an integer less than or equal to Y, Y is greater than 1, and R is greater than 1. This is not limited. Assuming that the second terminal apparatus may perform receive beam sweeping by using the receive beam set #2, the second terminal apparatus may receive a second signal on R beams in the U beams. U may be an integer greater than 1, and R may be an integer less than or equal to U. This is not limited. For example, as shown in FIG. 16, the UE #1 may send four SL CSI-RSs to the UE #2. It is assumed that the UE #1 sends the SL CSI-RS #c1 in the slot #1 by using the CSI-RS #a3, the UE #1 may send the SL CSI-RS #c2 in the slot #2 by using the CSI-RS #a3, the UE #1 may send the SL CSI-RS #c3 in the slot #3 by using the CSI-RS #a3, and the UE #1 may send the SL CSI-RS #a4 in the slot #4 by using the CSI-RS #a4.

Assuming that the second terminal apparatus may receive three first reference signals: the SL CSI-RS #c1, the SL CSI-RS #c2, and the SL CSI-RS #c3, the UE #2 may receive the SL CSI-RS #c1 in the slot #1 by using an SL CSI-RS #d1, the UE #2 may receive the SL CSI-RS #c2 in the slot #2 by using an SL CSI-RS #d2, and the UE #2 may receive the SL CSI-RS #c3 in the slot #3 by using an SL CSI-RS #d3. In this case, the UE #2 fails to receive the SL CSI-RS #c4 sent on the CSI-RS #a3. It may be understood that FIG. 16 corresponds to a scenario in which Y is equal to 4 and R is equal to 3. Optionally, the second terminal apparatus may determine a second transmit beam and a second receive beam in the following two manners. Specific descriptions are provided below.

Manner 1: The second terminal apparatus may directly determine the second transmit beam and the second receive beam based on the Z second signals. For example:

(1) The second terminal apparatus determines Z fourth channel measurement results based on the Z second signals.

The fourth channel measurement result may be at least one or more of an RSRP, RSRQ, an RSSI, an SINR, and the like. This is not limited. For ease of understanding, in this embodiment of this application, an example in which fourth channel measurement information includes an RSRP is used for subsequent description. The second terminal apparatus may perform signal measurement on the Z second signals, to determine RSRPs respectively corresponding to the Z second signals, and the RSRPs may be denoted as Z fourth RSRPs.

(2) The second terminal apparatus determines the second transmit beam based on third channel measurement results of the Z second reference signals.

The second terminal apparatus may determine a third channel measurement result set based on the third channel measurement results of the Z second reference signals and a third preset threshold. The third channel measurement result set may include an RSRP that is in the Z third RSRPs and that is greater than or equal to the third preset threshold, where the third preset threshold may be denoted as G3. In other words, the second terminal apparatus may determine an RSRP that is in the Z third RSRPs and that is greater than or equal to G3 as the third channel measurement result set. It may be understood that the third preset threshold may be selected based on a scenario. This is not limited. The second terminal apparatus may determine a second transmit beam set based on the third channel measurement result set. It may be understood that each third RSRP corresponds to one second reference signal, the Z third RSRPs are in one-to-one correspondence with the Z second reference signals, and the Z second reference signals are in one-to-one correspondence with Z beams in the transmit beam set #2. Therefore, the second terminal apparatus may determine the second transmit beam set based on a beam of a second reference signal corresponding to each third RSRP in the third channel measurement result set. The second transmit beam may be any transmit beam in the second transmit beam set. This is not limited.

Optionally, the second terminal apparatus may determine the second transmit beam based on the third channel measurement results of the Z second reference signals and the third preset threshold.

The second transmit beam may be a transmit beam corresponding to a largest third channel measurement result that is in the Z second reference signals and that is greater than or equal to the third preset threshold. In other words, the second terminal apparatus may use a beam corresponding to a largest third RSR in the Z third RSRPs as the second transmit beam.

The second transmit beam may be used to send a signal, that is, the second terminal apparatus may send a signal to the first terminal apparatus by using the second transmit beam.

(3) The second terminal apparatus determines the second receive beam based on the Z fourth channel measurement results.

The second terminal apparatus may determine a fourth channel measurement result set based on the Z fourth channel measurement results and a fourth preset threshold. The fourth channel measurement result set may include a fourth RSRP that is in the Z fourth RSRPs and that is greater than or equal to the fourth preset threshold, where the fourth preset threshold may be denoted as G4. In other words, the second terminal apparatus may determine an RSRP that is in the Z fourth RSRPs and that is greater than or equal to G4 as the fourth channel measurement result set. It may be understood that the fourth preset threshold may be selected based on a scenario. This is not limited.

The second terminal apparatus may determine a second receive beam set based on the fourth channel measurement result set. It may be understood that each fourth RSRP corresponds to one second signal, the Z fourth RSRPs are in one-to-one correspondence with the Z second signals, and the Z second signals are in one-to-one correspondence with Z beams in the receive beam set #2. Therefore, the second terminal apparatus may determine the second receive beam set based on a beam of a second signal corresponding to a fourth RSRP in the fourth channel measurement result set. The second receive beam may be any receive beam in the second receive beam set. This is not limited.

Optionally, the second terminal apparatus may further determine the second receive beam based on the Z fourth channel measurement results and the fourth preset threshold.

The second receive beam may be a receive beam corresponding to a largest fourth channel measurement result that is in the Z fourth channel measurement results and that is greater than or equal to the fourth preset threshold. In other words, the second terminal apparatus may use a beam corresponding to a largest fourth RSRP in the Z fourth RSRPs as the second receive beam.

The second receive beam may be used to receive a signal, that is, the second terminal apparatus may receive a signal from the first terminal apparatus by using the second receive beam.

For example, still referring to the foregoing embodiment, as shown in FIG. 15, if the third RSRP #1 and the third RSRP #3 in the third RSRP #1, the third RSRP #2, and the third RSRP #3 are greater than G3, the third channel measurement result set may include the third RSRP #1 and the third RSRP #3. Based on the above, it can be learned that the third RSRP #1 is in one-to-one correspondence with the SL CSI-RS #c1, and the SL CSI-RS #c1 is in one-to-one correspondence with the CSI-RS #c1. Therefore, the CSI-RS #c1 may be a transmit beam in the second transmit beam set. Similarly, the third RSRP #3 is in one-to-one correspondence with the SL CSI-RS #c3, and the SL CSI-RS #c3 is in one-to-one correspondence with the CSI-RS #c3. Therefore, the CSI-RS #c3 may be a transmit beam in the second transmit beam set. In this case, the second transmit beam may be the CSI-RS #c1 or the CSI-RS #c3. If the third RSRP #3 is greater than the third RSRP #1, the CSI-RS #c3 may be considered as an optimal transmit beam of the UE #2. For ease of understanding, in this embodiment of this application, an example in which the second transmit beam is the CSI-RS #c3 is used for subsequent description.

The UE #2 may measure the second signal #1 to obtain a fourth RSRP #1, the UE #2 may measure the second signal #2 to obtain a fourth RSRP #2, and the UE #1 may measure the second signal #3 to obtain a fourth RSRP #3. If the fourth RSRP #1 and the fourth RSRP #2 in the fourth RSRP #1, the fourth RSRP #2, and the fourth RSRP #3 are greater than G4, the fourth channel measurement result set may include the fourth RSRP #1 and the fourth RSRP #2. Based on the above, it can be learned that the fourth RSRP #1 is in one-to-one correspondence with the second signal #1, and the second signal #1 is in one-to-one correspondence with the CSI-RS #d1. Therefore, the CSI-RS #d1 may be a receive beam in the second receive beam set. Similarly, the fourth RSRP #2 is in one-to-one correspondence with the second signal #2, and the second signal #2 is in one-to-one correspondence with the CSI-RS #d2. Therefore, the CSI-RS #d2 may be a receive beam in the second receive beam set. In this case, the second receive beam may be the CSI-RS #d1 or the CSI-RS #d2. If the fourth RSRP #2 is greater than the fourth RSRP #1, the CSI-RS #d2 may be considered as an optimal receive beam of the UE #2. For ease of understanding, in this embodiment of this application, an example in which the second receive beam is the CSI-RS #d2 is used for subsequent description.

It may be understood that, as shown in FIG. 15, if the UE #1 sends a second signal to the UE #2 by using an S-SSB #a3, and the UE #2 performs receive beam sweeping by using the receive beam set #2, the UE #2 may fail to receive a second signal on a part of beams in the receive beam set #2, and the UE #2 may fail to receive a third RSRP carried in the second signal. Consequently, the UE #2 cannot determine the accurate second transmit beam. In this case, the UE #1 needs to send a second signal to the UE #2 by using the wide beam S-SSB #1.

Manner 2: The second terminal apparatus first determines the second transmit beam based on the Z third RSRPs, and determines the second receive beam based on the R third reference signals.

(1) The second terminal apparatus determines R fifth channel measurement results based on the R third reference signals.

The fifth channel measurement result may be at least one or more of an RSRP, RSRQ, an RSSI, an SINR, and the like. This is not limited. For ease of understanding, in this embodiment of this application, an example in which fifth channel measurement information includes an RSRP is used for subsequent description. The second terminal apparatus may perform signal measurement on the R third reference signals, to determine RSRPs respectively corresponding to the R third reference signals, and the RSRPs may be denoted as R fifth RSRPs.

(2) The second terminal apparatus determines the second transmit beam based on third channel measurement results of the Z second reference signals.

For an implementation process, refer to the related descriptions in Manner 1. Details are not described again.

(3) The second terminal apparatus determines the second receive beam based on the R fifth channel measurement results.

The second terminal apparatus may determine a fifth channel measurement result set based on the R fifth channel measurement results and a fifth preset threshold. The fifth channel measurement result set may include a fifth RSRP that is in the R fifth RSRPs and that is greater than or equal to the fifth preset threshold, where the fifth preset threshold may be denoted as G5. In other words, the second terminal apparatus may determine an RSRP that is in the R fifth RSRPs and that is greater than or equal to G5 as the fifth channel measurement result set. It may be understood that the fifth preset threshold may be selected based on a scenario. This is not limited.

The second terminal apparatus may determine a second receive beam set based on the fifth channel measurement result set. It may be understood that each fifth RSRP corresponds to one third reference signal, the R fifth RSRPs are in one-to-one correspondence with the R third reference signals, and the R third reference signals are in one-to-one correspondence with R beams in the receive beam set #2. Therefore, the second terminal apparatus may determine the second receive beam set based on a beam of a third reference signal corresponding to a fifth RSRP in the fifth channel measurement result set. The second receive beam may be any receive beam in the second receive beam set. This is not limited.

Optionally, the second terminal apparatus may further determine the second receive beam based on the R fifth channel measurement results and the fifth preset threshold.

The second receive beam may be a receive beam corresponding to a largest fifth channel measurement result that is in the R fifth channel measurement results and that is greater than or equal to the fifth preset threshold. In other words, the second terminal apparatus may use a beam corresponding to a largest fifth RSR in the R fifth RSRPs as the second receive beam.

The second receive beam may be used to receive a signal, that is, the second terminal apparatus may receive a signal from the first terminal apparatus by using the second receive beam.

In this case, as shown in FIG. 15, the UE #2 may determine the second transmit beam CSI-RS #c3 based on the Z third RSRPs carried in the Z second signals. Then, as shown in FIG. 16, the UE #1 may send a third reference signal to the UE #2 in the sending slot #5 by using the CSI-RS #a3, and the UE #2 may measure the received third reference signal and determine the second receive beam based on a measurement result. It may be understood that, in Manner 2, the transmit beam and the receive beam of the second terminal apparatus are separately trained. Compared with Manner 1, accuracy of the second transmit beam and the second receive beam can be further improved in this manner.

It may be understood that the foregoing method embodiment may be applied to a case in which the terminal apparatus supports a beam correspondence capability, or may be applied to a case in which the terminal apparatus does not support a beam correspondence capability. If the first terminal apparatus and the second terminal apparatus support the beam correspondence capability, directions of transmit beams or receive beams of the first terminal apparatus and the second terminal apparatus may be corrected in this embodiment of this application, so that reliability of communication between the first terminal apparatus and the second terminal apparatus can be improved.

If the first terminal apparatus and the second terminal apparatus do not support the beam correspondence capability, and the first terminal apparatus and the second terminal apparatus perform beam training by using steps shown in FIG. 6, and determine a transmit beam of the first terminal apparatus and a receive beam of the second terminal apparatus. In this case, a direction of a receive beam of the first terminal apparatus may be different from a direction of the transmit beam of the first terminal apparatus, and a direction of a transmit beam of the second terminal apparatus may be different from a direction of the receive beam of the second terminal apparatus. For example, as shown in FIG. 17, if the first terminal apparatus directly uses the direction of the transmit beam as the direction of the receive beam, and the second terminal apparatus directly uses the direction of the receive beam as the direction of the transmit beam, communication through the receive beam of the first terminal apparatus and the transmit beam of the second terminal apparatus may fail. In this embodiment of this application, the first terminal apparatus and/or the second terminal apparatus may determine both a transmit beam and a receive beam. Therefore, the transmit beam and the receive beam may be directly used for subsequent signal sending and receiving. This improves reliability of communication of the first terminal apparatus, simplifies a beam management procedure, reduces resource overheads, and improves resource utilization. Whether the terminal apparatus supports the beam correspondence capability is not limited in this embodiment of this application.

It may be understood that an embodiment of this application further provides another SL beam training method. The method may include the following steps.

Step 1: A UE #1 performs transmit beam sweeping.

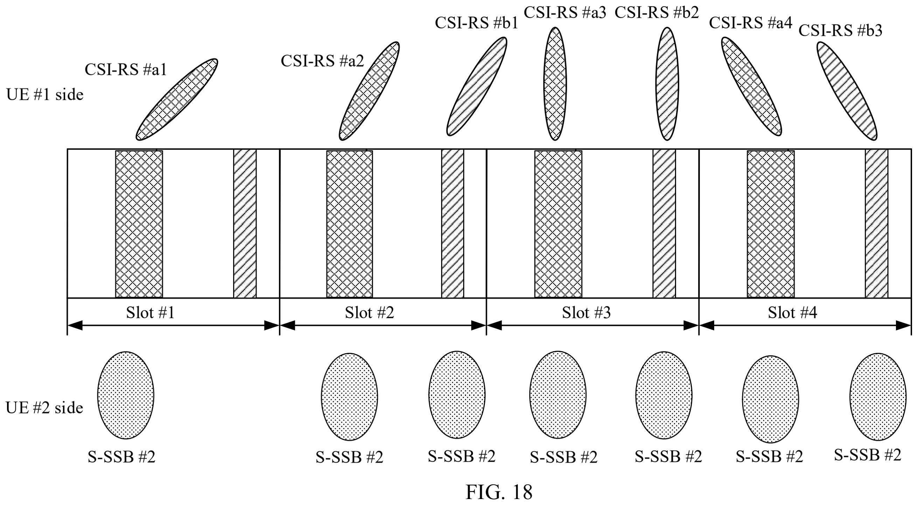

As shown in FIG. 18, the UE #1 may send an SL CSI-RS #a1 in a slot #1 by using a CSI-RS #a1, send an SL CSI-RS #a2 in a slot #2 by using a CSI-RS #a2, send an SL CSI-RS #a3 in a slot #3 by using a CSI-RS #a3, and send an SL CSI-RS #a4 in a slot #4 by using a CSI-RS #a4.

Assuming that a UE #2 may receive the SL CSI-RS #a1, the SL CSI-RS #a2, and the SL CSI-RS #a3, the UE #2 may receive the SL CSI-RS #a1 in the slot #1 by using an S-SSB #2, receive the SL CSI-RS #a2 in the slot #2 by using the S-SSB #2, and receive the S-SSB #2 and the SL CSI-RS #a3 in the slot #3 by using the S-SSB #2.

The UE #2 may measure the SL CSI-RS #a1 to obtain a first RSRP #1, the UE #2 may measure the SL CSI-RS #a2 to obtain a first RSRP #2, and the UE #2 may measure the SL CSI-RS #a3 to obtain a first RSRP #3. The UE #2 may include the first RSRP #1 in a first signal #1, include the first RSRP #2 in a first signal #2, and include the first RSRP #3 in a first signal #3.

In this case, the UE #2 may send the first signal #1 in the slot #2 by using the S-SSB #2, send the first signal #2 in the slot #3 by using the S-SSB #2, and send the first signal #3 in the slot #4 by using the S-SSB #2. Assuming that the UE #1 may receive the first signal #1, the first signal 2, and the first signal #3, the UE #1 may receive the first signal #1 in the slot #2 by using a CSI-RS #b1, receive the first signal #2 in the slot #3 by using a CSI-RS #b2, and receive the first signal #3 in the slot #4 by using a CSI-RS #b3.

The UE #1 may determine an optimal transmit beam, for example, the CSI-RS #a3, based on the first RSRPs carried in the first signal #1, the first signal 2, and the first signal #3, namely, the first RSRP #1, the first RSRP #2, and the first RSRP #3.

Step 2: The UE #2 performs receive beam sweeping.

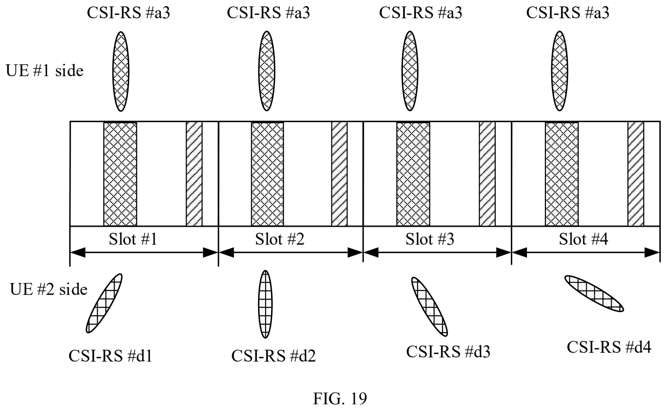

As shown in FIG. 19, the UE #1 may send an SL CSI-RS #b1 in the slot #1 by using the CSI-RS #a3, send an SL CSI-RS #b2 in the slot #2 by using the CSI-RS #a3, send an SL CSI-RS #b3 in the slot #3 by using the CSI-RS #a3, and send an SL CSI-RS #b4 in the slot #4 by using the CSI-RS #a4.

Assuming that the UE #2 may receive the SL CSI-RS #b1, the SL CSI-RS #b2, and the SL CSI-RS #b3, the UE #2 may receive the SL CSI-RS #b1 in the slot #1 by using an SL CSI-RS #d1, receive the SL CSI-RS #b2 in the slot #2 by using an SL CSI-RS #d2, and receive the SL CSI-RS #b3 in the slot #3 by using an SL CSI-RS #d3.

The UE #2 may measure the SL CSI-RS #b1 to obtain a second RSRP #1, the UE #2 may measure the SL CSI-RS #b2 to obtain a second RSRP #2, and the UE #2 may measure the SL CSI-RS #b3 to obtain a third RSRP #3. In this case, the UE #2 may determine an optimal receive beam, for example, a CSI-RS #d2, based on the second RSRP #1, the second RSRP #2, and the second RSRP #3.

Step 3: The UE #2 performs transmit beam sweeping.

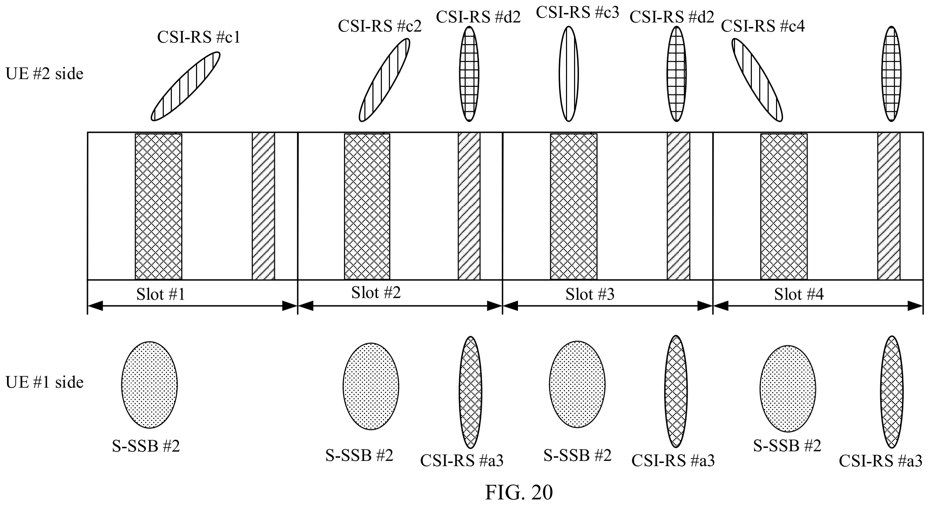

As shown in FIG. 20, the UE #2 may send an SL CSI-RS #c1 in the slot #1 by using a CSI-RS #c1, send an SL CSI-RS #c2 in the slot #2 by using a CSI-RS #c2, send an SL CSI-RS #c3 in the slot #3 by using a CSI-RS #c3, and send an SL CSI-RS #c4 in the slot #4 by using a CSI-RS #c4.

Assuming that the UE #1 may receive the SL CSI-RS #c1, the SL CSI-RS #c2, and the SL CSI-RS #c3, the UE #1 may receive the SL CSI-RS #c1 in the slot #1 by using the S-SSB #2, receive the SL CSI-RS #c2 in the slot #2 by using the S-SSB #2, and receive the SL CSI-RS #c3 in the slot #3 by using the S-SSB #2.

The UE #2 may measure the SL CSI-RS #c1 to obtain a third RSRP #1, the UE #2 may measure the SL CSI-RS #c2 to obtain a third RSRP #3, and the UE #2 may measure the SL CSI-RS #c3 to obtain a third RSRP #3. The UE #2 may include the third RSRP #1 in a second signal #1, include the third RSRP #2 in a second signal #2, and include the first RSRP #3 in a second signal #3.

In this case, the UE #2 may send the second signal #1 in the slot #2 by using the SL CSI-RS #a3, send the second signal #2 in the slot #3 by using the SL CSI-RS #a3, and send the second signal #3 in the slot #4 by using the SL CSI-RS #a3. Assuming that the UE #1 may receive the second signal #1, the first signal #2, and the first signal #3, the UE #1 may receive the second signal #1 in the slot #2 by using the CSI-RS #d2, receive the second signal #2 in the slot #3 by using the CSI-RS #d2, and receive the second signal #3 in the slot #4 by using the CSI-RS #d2.

The UE #1 may determine an optimal transmit beam, for example, the CSI-RS #c3, based on the third RSRPs carried in the first signal #1, the first signal 2, and the first signal #3, namely, the third RSRP #1, the third RSRP #2, and the third RSRP #3.

Step 4: The UE #1 performs receive beam sweeping.

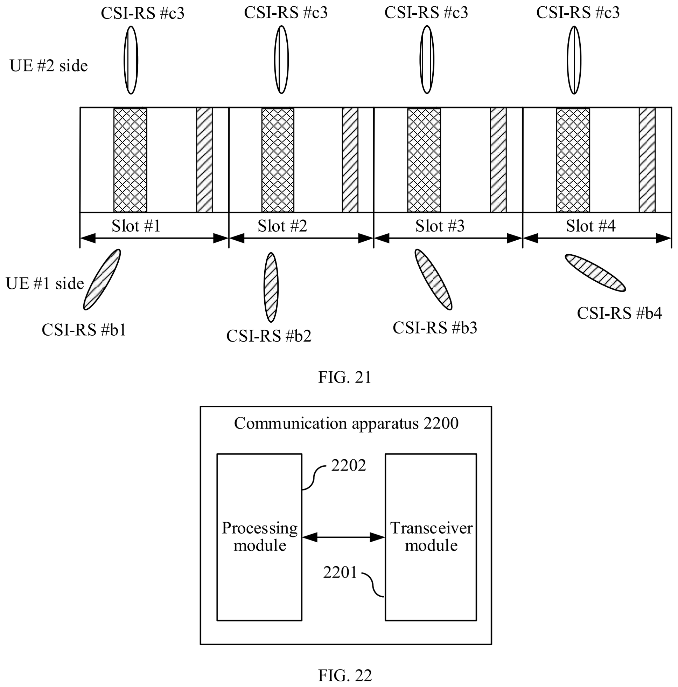

As shown in FIG. 21, the UE #2 may send the SL CSI-RS #d1 in the slot #1 by using the CSI-RS #c3, send the SL CSI-RS #d2 in the slot #2 by using the CSI-RS #c3, send the SL CSI-RS #d3 in the slot #3 by using the CSI-RS #c3, and send an SL CSI-RS #d4 in the slot #4 by using the CSI-RS #c3.

Assuming that the UE #1 may receive the SL CSI-RS #d1, the SL CSI-RS #d2, and the SL CSI-RS #d3, the UE #1 may receive the SL CSI-RS #d1 in the slot #1 by using the SL CSI-RS #b1, receive the SL CSI-RS #d2 in the slot #2 by using the SL CSI-RS #b2, and receive the SL CSI-RS #d3 in the slot #3 by using the SL CSI-RS #b3.

The UE #1 may measure the SL CSI-RS #d1 to obtain a fourth RSRP #1, the UE #1 may measure the SL CSI-RS #d2 to obtain a fourth RSRP #2, and the UE #1 may measure the SL CSI-RS #d3 to obtain a fourth RSRP #3. In this case, the UE #1 may determine an optimal transmit beam, for example, the CSI-RS #b2, based on the fourth RSRP #1, the fourth RSRP #2, and the fourth RSRP #3.

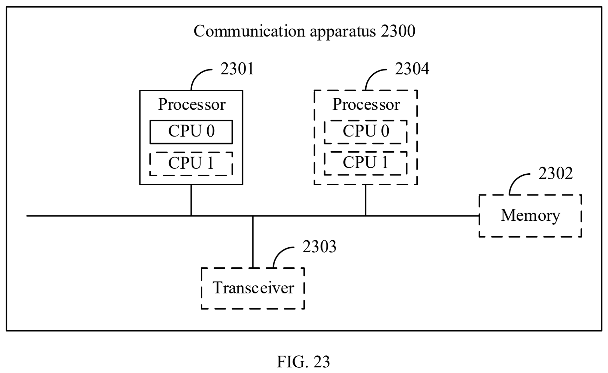

The foregoing describes in detail, with reference to FIG. 9 to FIG. 21, the communication methods provided in embodiments of this application. The following describes in detail, with reference to FIG. 22 and FIG. 23, communication apparatuses configured to perform the communication methods provided in embodiments of this application.

For example, FIG. 22 is a diagram 1 of a structure of a communication apparatus according to an embodiment of this application. As shown in FIG. 22, a communication apparatus 2200 includes a transceiver module 2201 and a processing module 2202. For ease of description, FIG. 22 merely shows main components of the communication apparatus.

In some embodiments, the communication apparatus 2200 is applicable to the communication system shown in FIG. 7, and performs a function of the foregoing first terminal apparatus.

The transceiver module 2201 may be configured to perform a message sending/receiving function of the first terminal apparatus, for example, a function in steps S901 and S903. The processing module 2202 may perform a function of the first terminal apparatus other than the message sending/receiving function, for example, a function in steps S904 and S905. For example, the transceiver module 2201 is configured to send N first reference signals to the second terminal apparatus; the transceiver module 2201 is further configured to receive M first signals from the second terminal apparatus; the processing module 2202 is configured to determine a first transmit beam based on first channel measurement results of M first reference signals; and the processing module 2202 is further configured to determine a first receive beam based on M second channel measurement results. N is an integer greater than 1; the M first signals are signals in P first signals, the P first signals are signals corresponding to P first reference signals, the M first signals carry first channel measurement results of M first reference signals corresponding to the M first signals, P is an integer less than or equal to N, and M is an integer less than or equal to P; the first transmit beam is used to send a signal; and the second channel measurement result is a channel measurement result of the first signal, and the first receive beam is used to receive a signal.

Optionally, the transceiver module 2201 may include a sending module and a receiving module. The sending module is configured to implement a sending function of the communication apparatus 2200, and the receiving module is configured to implement a receiving function of the communication apparatus 2200.

Optionally, the communication apparatus 2200 may further include a storage module, and the storage module stores a program or instructions. When the processing module 2202 executes the program or the instructions, the communication apparatus 2200 is caused to perform the foregoing communication method.

It should be noted that the communication apparatus 2200 may be a terminal apparatus, may be a chip (system) or another part or component that may be disposed in the terminal apparatus, or may be an apparatus including the terminal apparatus. This is not limited in this application.

In addition, for technical effects of the communication apparatus 2200, refer to the technical effects of the foregoing communication method. Details are not described herein again.

In some other embodiments, the communication apparatus 2200 is applicable to the communication system shown in FIG. 7, and performs a function of the foregoing second terminal apparatus.

The transceiver module 2201 may be configured to perform a message sending/receiving function of the second terminal apparatus, for example, a function in steps S901 and S903. The processing module 2202 may perform a function of the second terminal apparatus other than the message sending/receiving function, for example, a function in step S902. For example, the transceiver module 2201 is configured to receive P first reference signals from the first terminal apparatus; the processing module 2202 is configured to determine P first channel measurement results based on the P first reference signals; and the transceiver module 2201 is further configured to send P first signals to the first terminal apparatus. P is an integer greater than 1, and the P first signals carry the P first channel measurement results.

Optionally, the transceiver module 2201 may include a sending module and a receiving module. The sending module is configured to implement a sending function of the communication apparatus 2200, and the receiving module is configured to implement a receiving function of the communication apparatus 2200.

Optionally, the communication apparatus 2200 may further include a storage module, and the storage module stores a program or instructions. When the processing module 2202 executes the program or the instructions, the communication apparatus 2200 is caused to perform the foregoing communication method.

It should be noted that the communication apparatus 2200 may be a terminal apparatus, may be a chip (system) or another part or component that may be disposed in the terminal apparatus, or may be an apparatus including the terminal apparatus. This is not limited in this application.

In addition, for technical effects of the communication apparatus 2200, refer to the technical effects of the foregoing communication method. Details are not described herein again.

For example, FIG. 23 is a diagram 2 of a structure of a communication apparatus according to an embodiment of this application. The communication apparatus may be a terminal, or may be a chip (system) or another part or component that may be disposed in the terminal. As shown in FIG. 23, the communication apparatus 2300 may include a processor 2301. Optionally, the communication apparatus 2300 may further include a memory 2302 and/or a transceiver 2303. The processor 2301 is coupled to the memory 2302 and the transceiver 2303, for example, may be connected to the memory 2302 and the transceiver 2303 through a communication bus.

The following describes each component of the communication apparatus 2300 in detail with reference to FIG. 23.

The processor 2301 is a control center of the communication apparatus 2300, and may be one processor, or may be a general term of a plurality of processing elements. For example, the processor 2301 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 2301 may perform various functions of the communication apparatus 2300 by running or executing a software program stored in the memory 2302 and invoking data stored in the memory 2302, for example, perform the communication method shown in FIG. 9 to FIG. 21.

During specific implementation, in an embodiment, the processor 2301 may include one or more CPUs, for example, a CPU 0 and a CPU 1 shown in FIG. 23.

During specific implementation, in an embodiment, the communication apparatus 2300 may alternatively include a plurality of processors, for example, the processor 2301 and a processor 2304 shown in FIG. 23. Each of the processors may be a single-core (single-CPU) processor, or may be a multi-core (multi-CPU) processor. The processor herein may be one or more devices, circuits, and/or processing cores configured to process data (for example, computer program instructions).

The memory 2302 is configured to store a software program for performing the solutions in this application, and the processor 2301 controls execution of the software program. For a specific implementation, refer to the foregoing method embodiments. Details are not described herein again.

Optionally, the memory 2302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 2302 may be integrated with the processor 2301, or may exist independently, and is coupled to the processor 2301 through an interface circuit (not shown in FIG. 23) of the communication apparatus 2300. This is not specifically limited in embodiments of this application.

The transceiver 2303 is configured to communicate with another communication apparatus. For example, the communication apparatus 2300 is a terminal, and the transceiver 2303 may be configured to communicate with a network device or communicate with another terminal device. For another example, the communication apparatus 2300 is a network device, and the transceiver 2303 may be configured to communicate with a terminal or communicate with another network device.

Optionally, the transceiver 2303 may include a receiver and a transmitter (not separately shown in FIG. 23). The receiver is configured to implement a receiving function, and the transmitter is configured to implement a sending function.

Optionally, the transceiver 2303 may be integrated with the processor 2301, or may exist independently, and is coupled to the processor 2301 through an interface circuit (not shown in FIG. 23) of the communication apparatus 2300. This is not specifically limited in embodiments of this application.

It should be noted that the structure of the communication apparatus 2300 shown in FIG. 23 does not constitute a limitation on the communication apparatus. An actual communication apparatus may include more or fewer components than those shown in the figure, or combine a part of the components, or have different layouts of the components.

In addition, for technical effects of the communication apparatus 2300, refer to the technical effects of the communication method in the foregoing method embodiments. Details are not described herein again.

An embodiment of this application provides a communication system. The communication system may include the first terminal apparatus and the second terminal apparatus shown in FIG. 7.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a singular item (piece) or any combination of plural items (pieces). For example, at least one of a, b, or c may represent: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate component s may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    sending N first reference signals to a second terminal apparatus, wherein N is an integer greater than 1;
    receiving M first signals from the second terminal apparatus, wherein the M first signals are signals in P first signals, the P first signals are signals corresponding to P first reference signals, the M first signals carry first channel measurement results of M first reference signals corresponding to the M first signals, P is an integer less than or equal to N, and M is an integer less than or equal to P;
    determining a first transmit beam based on the first channel measurement results of the M first reference signals, wherein the first transmit beam is used to send a signal; and
    determining a first receive beam based on M second channel measurement results, wherein the second channel measurement result is a channel measurement result of the first signal, and the first receive beam is used to receive a signal.

2. The method according to claim 1, wherein the determining the first transmit beam based on the first channel measurement results of the M first reference signals comprises:

    determining a first channel measurement result set based on the first channel measurement results of the M first reference signals and a first preset threshold, wherein the first channel measurement result set comprises a first channel measurement result that is in the first channel measurement results of the M first reference signals and that is greater than or equal to the first preset threshold; and
    determining a first transmit beam set based on the first channel measurement result set, wherein the first transmit beam is any transmit beam in the first transmit beam set.

3. The method according to claim 1, wherein the determining the first receive beam based on the M second channel measurement results comprises:

    determining a second channel measurement result set based on the M second channel measurement results and a second preset threshold, wherein the second channel measurement result set comprises a second channel measurement result that is in the M second channel measurement results and that is greater than or equal to the second preset threshold; and
    determining a first receive beam set based on the second channel measurement result set, wherein the first receive beam is any receive beam in the first receive beam set.

4. The method according to any one of claims 1 to 3, wherein the method further comprises:

    receiving X second reference signals from the second terminal apparatus, wherein X is an integer greater than 1;
    determining X third channel measurement results based on the X second reference signals; and
    sending X second signals to the second terminal apparatus, wherein the X second signals carry the X third channel measurement results.

5. The method according to claim 4, wherein the method further comprises:
sending Y third reference signals to the second terminal apparatus, wherein the third reference signal is used for channel measurement, and Y is an integer greater than 1.

6. A communication method, comprising:

    receiving P first reference signals from a first terminal apparatus, wherein P is an integer greater than 1;
    determining P first channel measurement results based on the P first reference signals; and
    sending P first signals to the first terminal apparatus, wherein the P first signals carry the P first channel measurement results.

7. The method according to claim 6, wherein the method further comprises:

    sending Q second reference signals to the first terminal apparatus, wherein Q is an integer greater than 1; and
    receiving Z second signals from the first terminal apparatus, wherein the Z first signals are signals in X second signals, the X second signals are signals corresponding to X second reference signals, the Z second signals carry third channel measurement results of Z second reference signals corresponding to the Z second signals, X is an integer less than or equal to Q, and Z is an integer less than or equal to X.

8. The method according to claim 7, wherein the method further comprises:

   determining Z fourth channel measurement results based on the Z second signals;
   determining a second transmit beam based on the third channel measurement results of the Z second reference signals, wherein the second transmit beam is used to send a signal; and
   determining a second receive beam based on the Z fourth channel measurement results, wherein the second receive beam is used to receive a signal.

9. The method according to claim 7, wherein the method further comprises:
   receiving R third reference signals from the first terminal apparatus, wherein the third reference signal is used for channel measurement, and R is an integer greater than 1.

10. The method according to claim 9, wherein the method further comprises:

    determining R fifth channel measurement results based on the R third reference signals;
    determining a second transmit beam based on the third channel measurement results of the Z second reference signals, wherein the second transmit beam is used to send a signal; and
    determining a second receive beam based on the R fifth channel measurement results, wherein the second receive beam is used to receive a signal.

11. The method according to claim 8 or 10, wherein the determining the second transmit beam based on the third channel measurement results of the Z second reference signals comprises:

    determining a third channel measurement result set based on the third channel measurement results of the Z second reference signals and a third preset threshold, wherein the third channel measurement result set comprises a third channel measurement result that is in the third channel measurement results of the Z second reference signals and that is greater than or equal to the third preset threshold; and
    determining a second transmit beam set based on the third channel measurement result set, wherein the second transmit beam is any transmit beam in the second transmit beam set.

12. The method according to claim 8, wherein the determining the second receive beam based on the Z fourth channel measurement results comprises:

    determining a fourth channel measurement result set based on the Z fourth channel measurement results and a fourth preset threshold, wherein the fourth channel measurement result set comprises a fourth channel measurement result that is in the Z fourth channel measurement results and that is greater than or equal to the fourth preset threshold; and
    determining a second receive beam set based on the fourth channel measurement result set, wherein the second receive beam is any receive beam in the second receive beam set.

13. The method according to claim 10, wherein the determining the second receive beam based on the R fifth channel measurement results comprises:

    determining a fifth channel measurement result set based on the R fifth channel measurement results and a fifth preset threshold, wherein the fifth channel measurement result set comprises a fifth channel measurement result that is in the Z fifth channel measurement results and that is greater than or equal to the fifth preset threshold; and
    determining a second receive beam set based on the fifth channel measurement result set, wherein the second receive beam is any receive beam in the second receive beam set.

14. A communication apparatus, comprising a transceiver module and a processing module, wherein

    the transceiver module is configured to send N first reference signals to a second terminal apparatus, wherein N is an integer greater than 1;
    the transceiver module is further configured to receive M first signals from the second terminal apparatus, wherein the M first signals are signals in P first signals, the P first signals are signals corresponding to P first reference signals, the M first signals carry first channel measurement results of M first reference signals corresponding to the M first signals, P is an integer less than or equal to N, and M is an integer less than or equal to P;
    the processing module is configured to determine a first transmit beam based on the first channel measurement results of the M first reference signals, wherein the first transmit beam is used to send a signal; and
    the processing module is further configured to determine a first receive beam based on M second channel measurement results, wherein the second channel measurement result is a channel measurement result of the first signal, and the first receive beam is used to receive a signal.

15. The apparatus according to claim 14, wherein the processing module is further configured to determine a first channel measurement result set based on the first channel measurement results of the M first reference signals and a first preset threshold, wherein the first channel measurement result set comprises a first channel measurement result that is in the first channel measurement results of the M first reference signals and that is greater than or equal to the first preset threshold; and
the processing module is further configured to determine a first transmit beam set based on the first channel measurement result set, wherein the first transmit beam is any transmit beam in the first transmit beam set.

16. The apparatus according to claim 14, wherein the processing module is further configured to determine a second channel measurement result set based on the M second channel measurement results and a second preset threshold, wherein the second channel measurement result set comprises a second channel measurement result that is in the M second channel measurement results and that is greater than or equal to the second preset threshold; and
the processing module is further configured to determine a first receive beam set based on the second channel measurement result set, wherein the first receive beam is any receive beam in the first receive beam set.

17. The apparatus according to any one of claims 14 to 16, wherein the transceiver module is further configured to receive X second reference signals from the second terminal apparatus, wherein X is an integer greater than 1;

the processing module is further configured to determine X third channel measurement results based on the X second reference signals; and
the transceiver module is further configured to send X second signals to the second terminal apparatus, wherein the X second signals carry the X third channel measurement results.

18. The apparatus according to claim 17, wherein the transceiver module is further configured to send Y third reference signals to the second terminal apparatus, wherein the third reference signal is used for channel measurement, and Y is an integer greater than 1.

19. A communication apparatus, comprising a transceiver module and a processing module, wherein

the transceiver module is configured to receive P first reference signals from a first terminal apparatus, wherein P is an integer greater than 1; and the processing module is configured to determine P first channel measurement results based on the P first reference signals; and
the transceiver module is further configured to send P first signals to the first terminal apparatus, wherein the P first signals carry the P first channel measurement results.

20. The apparatus according to claim 19, wherein

the transceiver module is further configured to send Q second reference signals to the first terminal apparatus, wherein Q is an integer greater than 1; and
the transceiver module is further configured to receive Z second signals from the first terminal apparatus, wherein the Z first signals are signals in X second signals, the X second signals are signals corresponding to X second reference signals, the Z second signals carry third channel measurement results of Z second reference signals corresponding to the Z second signals, X is an integer less than or equal to Q, and Z is an integer less than or equal to X.

21. The apparatus according to claim 20, wherein the processing module is further configured to determine Z fourth channel measurement results based on the Z second signals;

the processing module is further configured to determine a second transmit beam based on the third channel measurement results of the Z second reference signals, wherein the second transmit beam is used to send a signal; and
the processing module is further configured to determine a second receive beam based on the Z fourth channel measurement results, wherein the second receive beam is used to receive a signal.

22. The apparatus according to claim 20, wherein the transceiver module is further configured to receive R third reference signals from the first terminal apparatus, wherein the third reference signal is used for channel measurement, and R is an integer greater than 1.

23. The apparatus according to claim 22, wherein the processing module is further configured to determine R fifth channel measurement results based on the R third reference signals;

the processing module is further configured to determine a second transmit beam based on the third channel measurement results of the Z second reference signals, wherein the second transmit beam is used to send a signal; and the processing module is further configured to determine a second receive beam based on the R fifth channel measurement results, wherein the second receive beam is used to receive a signal.

24. The apparatus according to claim 21 or 23, wherein the processing module is further configured to determine a third channel measurement result set based on the third channel measurement results of the Z second reference signals and a third preset threshold, wherein the third channel measurement result set comprises a third channel measurement result that is in the third channel measurement results of the Z second reference signals and that is greater than or equal to the third preset threshold; and the processing module is further configured to determine a second transmit beam set based on the third channel measurement result set, wherein the second transmit beam is any transmit beam in the second transmit beam set.

25. The apparatus according to claim 21, wherein the processing module is further configured to determine a fourth channel measurement result set based on the Z fourth channel measurement results and a fourth preset threshold, wherein the fourth channel measurement result set comprises a fourth channel measurement result that is in the Z fourth channel measurement results and that is greater than or equal to the fourth preset threshold; and the processing module is further configured to determine a second receive beam set based on the fourth channel measurement result set, wherein the second receive beam is any receive beam in the second receive beam set.

26. The apparatus according to claim 23, wherein the processing module is further configured to determine a fifth channel measurement result set based on the R fifth channel measurement results and a fifth preset threshold, wherein the fifth channel measurement result set comprises a fifth channel measurement result that is in the Z fifth channel measurement results and that is greater than or equal to the fifth preset threshold; and the processing module is further configured to determine a second receive beam set based on the fifth channel measurement result set, wherein the second receive beam is any receive beam in the second receive beam set.

27. A communication apparatus, wherein the communication apparatus comprises a processor, the processor is coupled to a memory, the memory is configured to store computer instructions, and when the processor executes the instructions, the communication apparatus is caused to perform the method according to any one of claims 1 to 13.

28. A communication chip, wherein the communication chip stores instructions, and when the chip runs on a communication device, the method according to any one of claims 1 to 13 is implemented.

29. A computer-readable storage medium, wherein the computer-readable storage medium comprises a computer program or instructions, and when the computer program or the instructions are run on a computer, the computer is caused to perform the method according to any one of claims 1 to 13.

30. A computer program product, wherein the computer program product comprises a computer program or instructions, and when the computer program or the instructions are run on a communication apparatus, the method according to any one of claims 1 to 13 is performed.

FIG. 1

FIG. 2

FIG. 3

TCI state

First RS → QCL type → Second RS

FIG. 4

| AGC | DMRS PSSCH | PSSCH | DMRS | PSSCH | DMRS | PSSCH | PSSCH | DMRS | PSSCH | PSSCH | Guard |
| | PSCCH | | | | | | | | | | |

FIG. 5

UE #a

UE #b

FIG. 6

First terminal
apparatus

Second terminal
apparatus

FIG. 7

First terminal
apparatus

S-SSB #1

S-SSB #2

Second terminal
apparatus

FIG. 8

| First terminal apparatus | | Second terminal apparatus |
|---|---|---|

S901: Send N first reference signals (including P first reference signals) to the second terminal apparatus

S902: Determine P first channel measurement results based on the P first reference signals

S903: Receive M first signals (where the M first signals are signals in P first signals) from the second terminal apparatus

S904: Determine a first transmit beam based on first channel measurement results of M first reference signals

S905: Determine a first receive beam based on M second channel measurement results

FIG. 9

S-SSB #1

CSI-RS #a1

CSI-RS #a4

CSI-RS #a2

CSI-RS #a3

FIG. 10

FIG. 11

S-SSB #1

CSI-RS #b1

CSI-RS #b4

CSI-RS #b3

CSI-RS #b2

FIG. 12

S-SSB #2

CSI-RS #c1

CSI-RS #c4

CSI-RS #c2

CSI-RS #c3

FIG. 13

S-SSB #2

CSI-RS #d1

CSI-RS #d4

CSI-RS #d2

CSI-RS #d3

FIG. 14

FIG. 15

CSI-RS #a3 CSI-RS #a3 CSI-RS #a3 CSI-RS #a3

UE #2 side

| Slot #1 | Slot #2 | Slot #3 | Slot #4 |

UE #1 side

CSI-RS #d1 CSI-RS #d2 CSI-RS #d3 CSI-RS #d4

FIG. 16

First terminal
apparatus

Second terminal
apparatus

FIG. 17

EP 4 708 995 A1

FIG. 18

CSI-RS #a3          CSI-RS #a3          CSI-RS #a3          CSI-RS #a3

UE #1 side

Slot #1          Slot #2          Slot #3          Slot #4

UE #2 side

CSI-RS #d1          CSI-RS #d2          CSI-RS #d3          CSI-RS #d4

FIG. 19

FIG. 20

CSI-RS #c3      CSI-RS #c3      CSI-RS #c3      CSI-RS #c3

UE #2 side

Slot #1          Slot #2          Slot #3          Slot #4

UE #1 side

CSI-RS #b1                                         CSI-RS #b4

CSI-RS #b2                       CSI-RS #b3

FIG. 21

Communication apparatus 2200

2202

Processing
module

Transceiver
module

2201

FIG. 22

Communication apparatus 2300

2301

Processor

CPU 0

CPU 1

2304

Processor

CPU 0

CPU 1

2302

Memory

2303

Transceiver

FIG. 23

## INTERNATIONAL SEARCH REPORT

| International application No. |
| --- |
| **PCT/CN2024/101252** |

**A.    CLASSIFICATION OF SUBJECT MATTER**

H04W72/044(2023.01)i

According to International Patent Classification (IPC) or to both national classification and IPC

**B.    FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, DWPI, ENTXT, VEN, WPABS, CNKI, 3GPP: 边链路, 侧链路, 侧行链路, 辅链路, 旁链路, 边链路, 参考信号, 波束, 测量, 结果, 反馈, sidelink, side link, RS, reference signal, beam, measure, result, feedback

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117042135 A (HUAWEI TECHNOLOGIES CO., LTD.) 10 November 2023 (2023-11-10) claims 1-30 | 1-30 |
| X | CN 113366902 A (HYUNDAI MOTOR CO., LTD. et al.) 07 September 2021 (2021-09-07) claims 1-20 | 6, 19, 27-30 |
| X | CN 116326136 A (BEIJING XIAOMI MOBILE SOFTWARE CO., LTD.) 23 June 2023 (2023-06-23) claims 1-57 | 6, 19, 27-30 |
| A | CN 108282211 A (HUAWEI TECHNOLOGIES CO., LTD.) 13 July 2018 (2018-07-13) entire document | 1-30 |
| A | WO 2016101685 A1 (ZTE CORP.) 30 June 2016 (2016-06-30) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 August 2024** | **04 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101252**

| Patent document cited in search report | | | Publication date (day/month/year) | Patent family member(s) | | | Publication date (day/month/year) |
|---|---|---|---|---|---|---|---|
| CN | 117042135 | A | 10 November 2023 | None | | | |
| CN | 113366902 | A | 07 September 2021 | None | | | |
| CN | 116326136 | A | 23 June 2023 | None | | | |
| CN | 108282211 | A | 13 July 2018 | EP | 3553964 | A1 | 16 October 2019 |
| | | | | EP | 3553964 | A4 | 25 December 2019 |
| | | | | WO | 2018126882 | A1 | 12 July 2018 |
| | | | | BR | 112019014034 | A2 | 04 February 2020 |
| | | | | CA | 3048933 | A1 | 12 July 2018 |
| | | | | CA | 3048933 | C | 28 February 2023 |
| | | | | US | 2019327060 | A1 | 24 October 2019 |
| | | | | US | 10979193 | B2 | 13 April 2021 |
| WO | 2016101685 | A1 | 30 June 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310809455